# EUROPEAN PATENT SPECIFICATION

(11) **EP 3 515 879 B1**
(45) Date of publication and mention of the grant of the patent: **05.04.2023**
(21) Application number: 17854145.4
(22) Date of filing: 26.09.2017
(51) Int. Cl.: B28B 11/24, C04B 40/02, C04B 28/18

(54) **ADVANCED CURING EQUIPMENT**
FORTSCHRITTLICHE HÄRTUNGSAUSRÜSTUNG
ÉQUIPEMENT DE DURCISSEMENT AVANCÉ

(30) Priority: 26.09.2016 US 201662399949 P
(43) Date of publication of application: 31.07.2019
(73) Proprietor: Solidia Technologies, Inc., Piscataway, NJ 08854 (US)
(72) Inventor: QUINN, Sean, Camron, Branchburg, NJ 08876 (US); SMITH, Kenneth, Michael, Somerville, NJ 08876 (US); PATTEN, Devin, M., Red Bank, NJ 07701 (US); HU, Xudong, Monroe, NJ 08831 (US); PERRY, George, Metuchen, NJ 08840 (US); ATAKAN, Vahit, Princeton, NJ 08540 (US); JAIN, Jitendra, Edison, NJ 08820 (US); SETH, Anuj, East Brunswick, NJ 08816 (US); TAS, Ahmet, Cuneyt, Piscataway, NJ 08854 (US); BLACKLOOK, Alan, Thomas, Clark, NJ 07066 (US); SCHULER, Thomas, Landenberg, PA 19350 (US); GROOTENBOER, Christopher, J., Bryan, OH 43506 (US); CASTORO, Dan, Lincroft, NJ 07738 (US)
(74) Representative: Dentons Patent Solutions Rechtsanwaltsgesellschaft mbH
(86) International application number: PCT/US2017/053539
(87) International publication number: WO 2018/058139

(56) References cited:
- WO-A2-2016/022522
- JP-A- H02 137 782
- US-A- 5 518 540
- US-A1- 2014 116 295
- US-A1- 2014 322 083
- US-A1- 2014 322 083
- US-A1- 2015 225 295
- US-A1- 2015 225 295
- US-A1- 2015 336 852
- US-A1- 2017 102 373

## Description

### FIELD OF THE INVENTION

The invention relates to a curing apparatus that is used with materials that cure by reaction with CO₂.

### BACKGROUND OF THE INVENTION

Systems and methods for curing materials using CO₂ as a reagent are known in the prior art.

J. M. Bukowski and R. L. Berger, Cement and Concrete Research, Vol. 9, pp. 57-68, January 1979, is said to describe the carbonation of non-hydraulic, γ-Ca₂SiO₄ and CaSiOs, mortars and powders exposed to 100% RH and 100% CO₂ environments. The rate of reaction and strength development is faster in γ-Ca₂SiO₄ than in CaSiO₃. Increasing CO₂ pressure from atmospheric to 5.62 MPa [55.5 atmosphere, or 815 pounds per square inch] increases the degree of reaction in both γ-Ca₂SiO₄ and CaSiO₃. Strength increases as a function of degree of reaction and CO₂ pressures above 2.00 MPa. The potential use of non-hydraulic materials for CO₂ activated cements is discussed.

Also known is International Patent Application Publication No. WO 2017/041188 A1 by Al-Ghouleh et al., published on March 16, 2017, which is said to describe a process for producing precast products in an airtight enclosure, which comprises the steps of a carbonation of pre-dried concrete precast units by feeding CO₂ gas into a closed airtight enclosure under near ambient atmospheric pressure (psig between 0 and 2 (between 0 and 0.14 bars)) and/or low pressure (between 2 and 15 psig (between 0.14 and 1.03 bars)) conditions, wherein said pre-dried concrete units have lost between 25 to 60% of their initial mix water content.

US 2015/225295 A1 discloses an apparatus for curing materials that cure under reaction with CO2 according to the preamble of claim 1.

There is a need for curing equipment and methods that provide improved curing of materials that are cured by reaction with CO₂.

### SUMMARY OF THE INVENTION

The present invention features an apparatus for curing materials that cure under reaction with CO₂, comprising: a curing chamber configured to contain a material that consumes CO₂ as a reagent, the material does not cure in the absence of CO₂ during curing, the material does not cure in the presence of water alone, and the material does not consume water during curing, the curing chamber having at least one port configured to allow the material to be introduced into the curing chamber and to be removed from the curing chamber, and having at least one closure for the port, the closure configured to provide an atmospheric seal when closed so as to prevent contamination of a gas present in the curing chamber by gas outside the curing chamber; a source of carbon dioxide or air configured to provide gaseous carbon dioxide or air to the curing chamber by way of a gas entry port in the curing chamber, the source of carbon dioxide or air having at least one flow regulation device configured to control a flow rate of the gaseous carbon dioxide or air into the curing chamber; a gas flow subsystem configured to circulate the gaseous carbon dioxide or air through the curing chamber; a temperature control subsystem configured to control a temperature of the gas within the chamber; a humidity control subsystem configured to control a humidity in the gas within the chamber; and at least one controller in communication with at least one of the source of carbon dioxide, the gas flow subsystem, the temperature control subsystem, and the humidity control subsystem, the at least one controller is configured to control independently at least a respective one of the flow rate of the gas inside the chamber, the circulation of the gas through the curing chamber, the temperature of the gas, and the humidity in the gas, the at least one controller is configured to provide a time of residence in a first drying phase (Phase 1), wherein a residence time in the first drying phase is configured to be minimized, and the at least one controller is configured to transition from the first drying phase (Phase 1) to a second carbonation phase (Phase 2) at the end of the first drying phase (Phase 1); wherein the apparatus is configured to detect a transition from the first drying phase (Phase 1) to the second carbonation phase (Phase 2) by detecting a change in one or more electrical properties of the material on the surface or in the bulk thereof, or in the alternative, wherein the concentration of CO₂ is reduced during the second carbonation phase (Phase 2).

The absolute pressure of the curing process executed in said chamber takes place at pressures in the range of 0.1 atmospheres to lower than 5 atmospheres absolute pressure in order to avoid the use of complex, pressure-rated components. Preferably, the process takes place between 0.68 - 1.36 atmospheres (10-20 psi) absolute pressure. More preferably, the process takes place between 0.98 - 1.02 atmospheres (14.5-14.9 psi) absolute pressure.

In one embodiment, the apparatus is configured to first expose the material to the first drying phase (Phase 1) in absence of deliberately added CO₂.

In another embodiment, the apparatus is configured to first expose the material to the first drying phase (Phase 1) in presence of CO₂.

In still another embodiment, the one or multiple electrical properties of the material include at least one of a surface resistivity, a volume resistivity, a conductivity, an impedance, a capacitance, a dielectric constant, a dielectric strength, a permittivity, a piezoelectric constant, and a Seebeck coefficient.

In a further embodiment not forming part of the invention, the apparatus is configured to detect the transition from the first drying phase (Phase 1) to the second carbonation phase (Phase 2) by detecting a change in the quantity of water that is removed from the material.

In yet a further embodiment not forming part of the invention, the apparatus is configured to detect the transition from the first drying phase (Phase 1) to the second carbonation phase (Phase 2) by detecting a change in the rate of water removed from the material.

In an additional embodiment not forming part of the invention, the apparatus is configured to detect the transition from the first drying phase (Phase 1) to the second carbonation phase (Phase 2) by detecting a change in the rate of water collected from the gas circulating in the chamber.

In one more embodiment not forming part of the invention, the apparatus is configured to detect the transition from the first drying phase (Phase 1) to the second carbonation phase (Phase 2) by detecting a change in at least one of a CO₂ concentration and an O₂ concentration in the gas circulating in the chamber.

In still a further embodiment not forming part of the invention, the apparatus is configured to detect the transition from the first drying phase (Phase 1) to the second carbonation phase (Phase 2) by detecting a change in the relative humidity of the gas circulating in the chamber.

In one embodiment not forming part of the invention, the apparatus is configured to detect the transition from the first drying phase (Phase 1) to the second carbonation phase (Phase 2) by detecting a change in temperature of the gas circulating in the chamber.

In yet another embodiment not forming part of the invention, the apparatus is configured to detect the transition from the first drying phase (Phase 1) to the second carbonation phase (Phase 2) by detecting a change in temperature of the material.

In still another embodiment not forming part of the invention, the apparatus is configured to monitor the change in temperature of the material using an infrared camera.

In a further embodiment not forming part of the invention, the apparatus is configured to detect the transition from the first drying phase (Phase 1) to the second carbonation phase (Phase 2) by detecting a change in the pressure inside the chamber.

In yet a further embodiment, the apparatus is configured to measure, track and control the pressure inside the chamber throughout the process in any of the first drying phase (Phase 1) and the second curing phase (Phase 2).

In an additional embodiment not forming part of the invention, the apparatus is configured to detect the transition from the first drying phase (Phase 1) to the second carbonation phase (Phase 2) by detecting a change in the pH of the material.

In one more embodiment not forming part of the invention, the apparatus is configured to detect the transition from the first drying phase (Phase 1) to the second carbonation phase (Phase 2) by detecting a change in the pH of the water collected during curing of the material.

In still a further embodiment not forming part of the invention, the apparatus is configured to detect the transition from the first drying phase (Phase 1) to the second carbonation phase (Phase 2) by detecting a change in the elemental composition of the material.

In one embodiment, the apparatus is configured to measure, track and control the elemental composition of the material throughout the process in any of the first drying phase (Phase 1) and the second carbonation phase (Phase 2).

In another embodiment not forming part of the invention, the apparatus is configured to detect the transition from the first drying phase (Phase 1) to the second carbonation phase (Phase 2) by detecting a change in the response of the material to ultrasonic stimulation.

In yet another embodiment, the temperature control subsystem further comprises at least one energy source configured to heat at least one of the gas and the material.

In still another embodiment, the temperature control subsystem is configured to control the material temperature, a rate of water removal in the first drying phase (Phase 1) and a rate of reaction in the second carbonation phase (Phase 2).

In a further embodiment, the energy source is configured to control the time of residence in at least one of the first drying phase (Phase 1) and the second carbonation phase (Phase 2).

In yet a further embodiment, the energy source is configured to employ fossil fuel combustion.

In an additional embodiment, the energy source is configured to employ electrical resistance heating.

In one more embodiment, the energy source is configured to employ an infrared heat source.

In still a further embodiment, the energy source is configured to employ a laser.

In one embodiment, the energy source is configured to employ dielectric heating.

In another embodiment, the energy source configured to employ dielectric heating uses microwave frequency waves or radio frequency waves.

In yet another embodiment, the energy source configured to employ dielectric heating uses radio frequencies in the Industrial, Science and Medical band (ISM band).

In still another embodiment, the energy source is configured to employ plasma heating.

In a further embodiment, the energy source is configured to employ steam heating.

In yet a further embodiment, the energy source is configured to employ superheated steam.

In an additional embodiment, the energy source is configured to employ conduction.

In one more embodiment, the energy source is configured to employ a radiator.

In still a further embodiment, the energy source is configured to employ a radiation heat source.

In one embodiment, the energy source is configured to employ a co-generation facility.

In another embodiment, the humidity control subsystem is configured to control the water extraction from the material.

In yet another embodiment, the humidity control subsystem is configured to control the water extraction from the gas in the chamber during at least one of the first drying phase (Phase 1) and the second carbonation phase (Phase 2).

In still another embodiment, the humidity control subsystem is configured to control the water extraction using natural convection.

In a further embodiment, the humidity control subsystem is configured to control the water extraction using forced convection.

In yet a further embodiment, the humidity control subsystem is configured to control the water extraction using a compressor.

In an additional embodiment, the humidity control subsystem is configured to control the water extraction using a desiccant.

In one more embodiment, the humidity control subsystem is configured to control the water extraction using one of a heat exchanger and a chiller.

In still a further embodiment, the humidity control subsystem is configured to control the water extraction using lower than atmospheric pressure.

In one embodiment, the gas flow subsystem is configured to control the circulation of the gas in the chamber to control the water removal in the first drying phase (Phase 1).

In another embodiment, the gas flow subsystem is configured to control a flow and a velocity of the gas adjacent to the material.

In yet another embodiment, the gas flow subsystem is configured to control the circulation of the gas in the chamber to control the rate of reaction in the second carbonation phase (Phase 2).

In still another embodiment, the gas flow subsystem is configured to control the flow and velocity of the gas using a plenum.

In a further embodiment, the gas flow subsystem is configured to control the flow and velocity of the gas using an internal circulation system.

In yet a further embodiment, the internal circulation system comprises a fan.

In an additional embodiment, the gas flow subsystem is configured to control the flow and velocity of the gas using an external circulation system.

In one more embodiment, the external circulation system comprises a fan.

In still a further embodiment, the apparatus comprises an internal circulation system, an external circulation system and a bypass configured to proportion a gas flow between the internal circulation system and the external circulation system.

In one embodiment, the apparatus comprises multiple internal circulation systems, multiple external circulation systems, multiple heaters, and multiple dehumidification systems so as to comprise multiple independent control zones within the curing chamber.

In another embodiment, the gas flow regulation device is configured to change the concentration of CO₂ during the first drying phase (Phase 1) and second carbonation phase (Phase 2) to maximize the efficiency of CO₂ consumption during the curing process.

The following is provided as an example useful for understanding the invention: a method of curing a material that consumes CO₂ as a reagent, the material does not cure in the absence of CO₂ during curing, the material does not cure in the presence of water alone, and the material does not consume water during curing, comprising the steps of: providing an apparatus comprising: a curing chamber configured to contain a material that consumes CO₂ as a reagent, the material does not cure in the absence of CO₂ during curing, the material does not cure in the presence of water alone, and the material does not consume water during curing, the curing chamber having at least one port configured to allow the material to be introduced into the curing chamber and to be removed from the curing chamber, and having at least one closure for the port, the closure configured to provide an atmospheric seal when closed so as to prevent contamination of a gas present in the curing chamber by gas outside the curing chamber; a source of carbon dioxide or air configured to provide gaseous carbon dioxide or air to the curing chamber by way of a gas entry port in the curing chamber, the source of carbon dioxide or air having at least one flow regulation device configured to control a flow rate of the gaseous carbon dioxide or air into the curing chamber; a gas flow subsystem configured to circulate the gaseous carbon dioxide or air through the curing chamber; a temperature control subsystem configured to control a temperature of the gas within the chamber; a humidity control subsystem configured to control a humidity in the gas within the chamber; and at least one controller in communication with at least one of the source of carbon dioxide, the gas flow subsystem, the temperature control subsystem, and the humidity control subsystem, the at least one controller is configured to control independently at least a respective one of the flow rate of the gas inside the chamber, the circulation of the gas through the curing chamber, the temperature of the gas, and the humidity in the gas, the at least one controller is configured to provide a time of residence in a first drying phase (Phase 1), wherein a residence time in the first drying phase is configured to be minimized, and the at least one controller is configured to transition from the first drying phase (Phase 1) to a second carbonation phase (Phase 2) at the end of the first drying phase (Phase 1), performing a first drying phase having a first time of residence in the first dying phase, and performing a second curing phase at the end of the first drying phase.

The following is provided as an example useful for understanding the invention: an apparatus for curing of materials that harden under reaction with CO₂ and that do not harden in the presence of water alone, comprising: a curing chamber configured to contain a material that consumes CO₂ as a reagent and that does appreciably harden in the absence of CO₂, said curing chamber having at least one port configured to allow said material to be introduced into said curing chamber and to be removed from said curing chamber, and having at least one closure for said port, said closure configured to provide an atmospheric seal when closed so as to prevent contamination of a gas present in said curing chamber by gas outside said curing chamber; a source of carbon dioxide or air configured to provide gaseous carbon dioxide or air to said curing chamber by way of a gas entry port in said curing chamber, said source of carbon dioxide or air having at least one flow regulation device configured to control a flow rate of said gaseous carbon dioxide or air into said curing chamber; a gas circulation subsystem configured to circulate said gas through said curing chamber at a controlled flow rate and velocity; a temperature control subsystem configured to control a temperature of said gas within said chamber; a humidity control subsystem configured to control a humidity in said gas within said chamber; and at least one controller in communication with at least one of said source of carbon dioxide, said gas circulation subsystem, said temperature control subsystem, and said humidity control subsystem, wherein, said at least one controller is configured to control independently at least a respective one of said flow rate of said gas inside the chamber, said circulation of said gas through said curing chamber, said temperature of said gas, and said humidity in said gas, to reduce a time of residence in a first dying phase (Phase 1), and configured to perform a second carbonation phase (Phase 2) at the end of said first drying phase (Phase 1).

The following is provided as an example useful for understanding the invention: a method of curing materials that harden under reaction with CO₂ and that do not harden in the presence of water alone, comprising the steps of: performing a first drying phase (Phase 1) having a reduced time of residence in said first drying phase (Phase 1), and performing a second carbonation phase (Phase 2) at the end of said first drying phase (Phase 2).

The following is provided as an example useful for understanding the invention: a method of curing materials that harden under reaction with CO₂ and that do not harden in the presence of water alone, comprising the steps of: performing a first drying phase (Phase 1) having a reduced time of residence in said first drying phase (Phase 1), performing a second carbonation phase (Phase 2) at the end of said first drying phase (Phase 2), and repeating said first drying phase (Phase 1) and second carbonation phase (Phase 2) at least once.

In an embodiment, the method of curing materials that harden under reaction with CO₂ and that do not harden in the presence of water alone, comprises the steps of: performing a first drying phase (Phase 1) having a reduced time of residence in said first drying phase (Phase 1), performing a second carbonation phase (Phase 2) at the end of said first drying phase (Phase 1), and repeating said first drying phase (Phase 1) and second carbonation phase (Phase 2) more than once.

In an embodiment, the method of curing materials that harden under reaction with CO₂ and that do not harden in the presence of water alone, comprises of removing the balance moisture in the product as a part of any of the second carbonation phases (Phase 2). In some embodiments the removing of the balance moisture in the product comprises of any of the first drying phase (Phase 1).

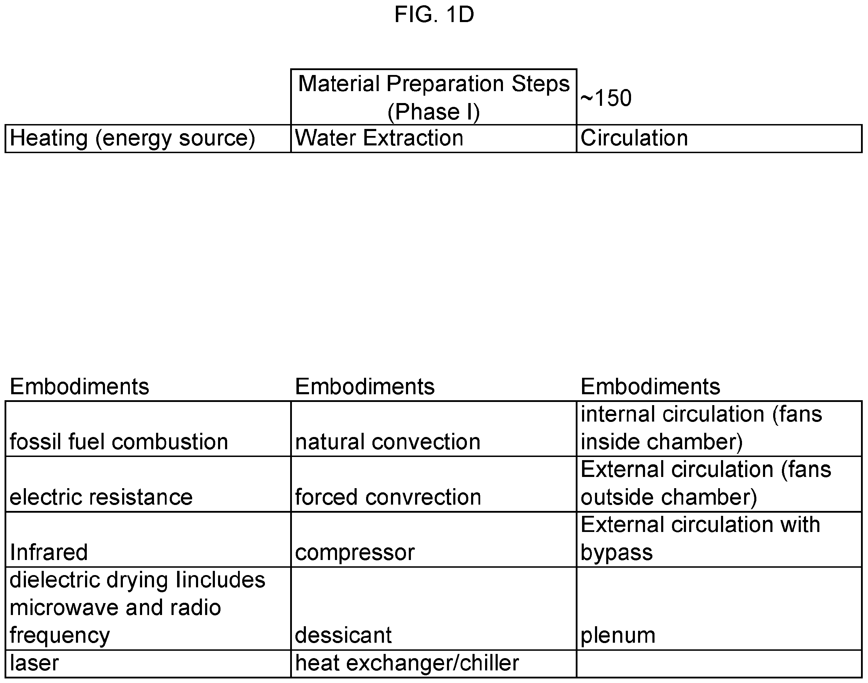

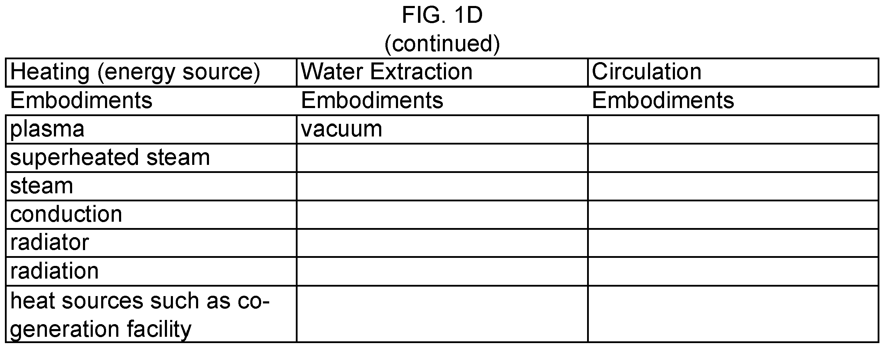

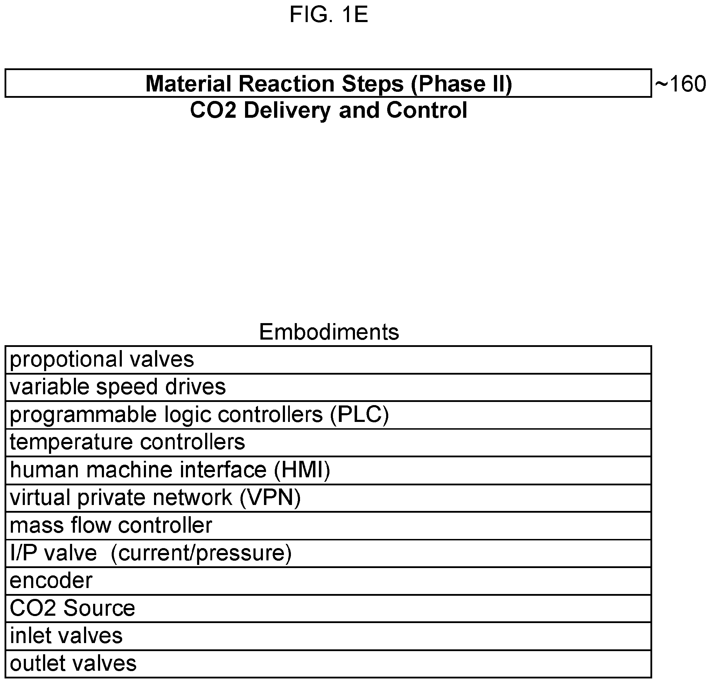

In various embodiments, the apparatus is expected to enable the following features and capabilities individually or in combination:
Control the temperature of the product to be cured by any individual or combination of methods and hardware as indicated in FIG. 1D during any of the drying phases (Phase 1) and/or any of the carbonation phases (Phase 2).
Control the velocity of gas local to the products as well as the circulation velocity and volume throughout the curing system by any individual or combination of methods and hardware as indicated in FIG. 1D during any of the drying phases (Phase 1) and/or any of the carbonation phases (Phase 2).
Control the relative humidity of the gas local to the products as well as within the circulating gas throughout the curing system by any individual or combination of methods and hardware as indicated in FIG. 1D during any of the drying phases (Phase 1) and/or any of the carbonation phases (Phase 2).
Facilitate the removal of excess moisture from the circulating gas (dehumidification) or increase the moisture content of the circulating gas (humdification) by any individual or combination of methods and hardware as indicated in FIG. 1D during any of the drying phases (Phase 1) and/or any of the carbonation phases (Phase 2).
Control the CO₂ concentration of the gas local to the products as well as within the circulating gas throughout the curing system by any individual or combination of methods and hardware as indicated in FIG. 1E during any of the drying phases (Phase 1) and/or any of the carbonation phases (Phase 2).

Facilitate the removal of water from the products (evaporation) to be cured by controlling the velocity, temperature, and humidity of the gas stream local to the products.

Control the velocity, temperature, and humidity of the gas stream local to the products in such a manner that a desirable evaporation rate and subsequent distribution of moisture in the pore structure of the product is created and maintained during any of the drying phases (Phase 1) and/or any of the carbonation phases (Phase 2).

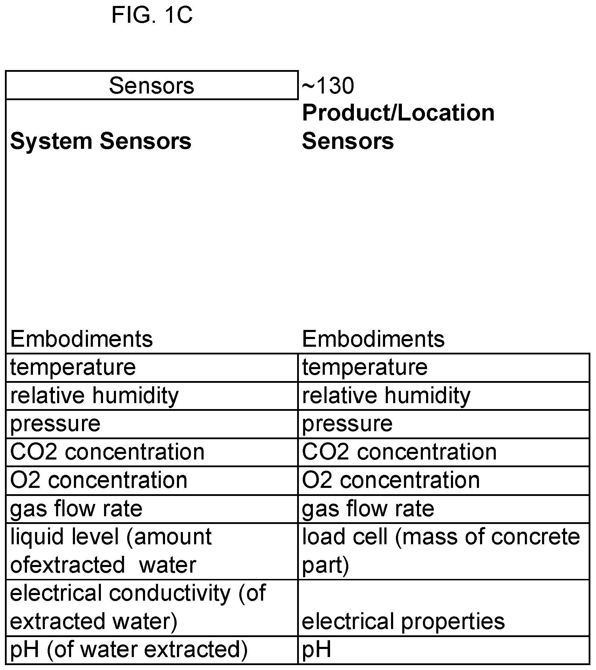

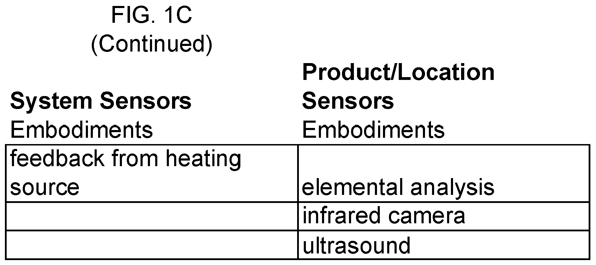

Incorporate sensor outputs from the product and/or the curing system as listed in FIG. 1C to be analyzed by the curing system to control the velocity, temperature, and humidity of the gas stream local to the products, and thus evaporation rate, in order to remove the quantity of water specified and create or maintain the distribution of moisture in the pore structure of the product as specified during any of the drying phases (Phase 1) and/or any of the carbonation phases (Phase 2).

Assure that the water content of individual products and the uniformity of the water content in each individual product is uniform throughout all products within the curing system.

Narrow the distribution of water content of individual products throughout all products within the curing system by controlling the velocity, temperature, and humidity of the gas stream local to the products so that uniform evaporation rates are induced through all regions of the curing chamber.

Incorporate sensor outputs from the product and/or the curing system as listed in FIG. 1C to be analyzed by the curing system to control the velocity, temperature, and humidity of the gas stream local to the products in fixed zones throughout the chamber during any of the drying phases (Phase 1) and/or carbonation phases (Phase 2) according to the state of the products and system in order to unify the level of dryness throughout the chamber.

Incorporate sensor outputs from the product and/or the curing system as listed in FIG. 1C to be analyzed by the curing system to control the velocity, temperature, and humidity of the gas stream local to the products in the entire chamber during the any of the drying phases (Phase 1) and/or the carbonation phases (Phase 2) according to the state of the products and system.

Incorporate sensor outputs from the product and/or the curing system as listed in FIG. 1C to be analyzed by the curing system to control the CO₂ concentration of the circulating gas during any of the drying phases (Phase 1) and/or the carbonation phases (Phase 2) according to the state of products and system.

The foregoing and other objects, aspects, features, and advantages of the invention will become more apparent from the following description and from the claims.

### BRIEF DESCRIPTION OF THE DRAWINGS

The objects and features of the invention can be better understood with reference to the drawings described below, and the claims. The drawings are not necessarily to scale, emphasis instead generally being placed upon illustrating the principles of the invention. In the drawings, like numerals are used to indicate like parts throughout the various views.

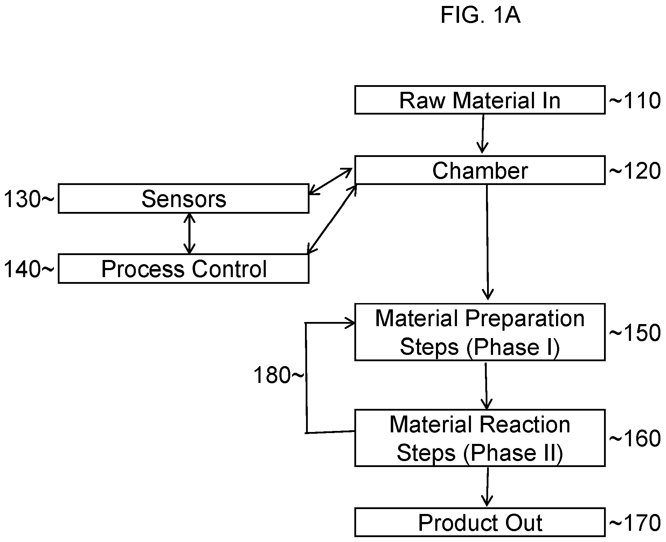

FIG. 1A is a schematic diagram that illustrates exemplary embodiments of advanced curing equipment according to principles of the invention. In FIG. 1A one can optionally iterate Phase I (150) and Phase II (160) as illustrated by arrow 180, and one can optionally go from Phase I (150) to product out (170) if desired.

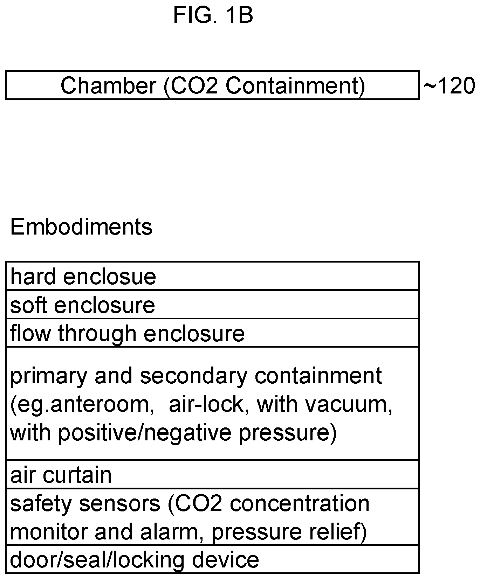

FIG. 1B is a schematic diagram that illustrates exemplary embodiments of chambers used in advanced curing equipment according to principles of the invention. The chamber (CO₂ Containment) 120, contains CO₂ for process purposes, for safety purposes, and to make process more economically efficient.
FIG. 1C is a schematic diagram that illustrates exemplary embodiments of sensors used in advanced curing equipment according to principles of the invention. The System Sensors provides system input parameters for closed-loop process control, real time data monitoring, and data logging. The Product/Location Sensors provides material input parameters for closed-loop process control, real time data monitoring, and data logging.
FIG. 1D is a schematic diagram that illustrates exemplary embodiments of a first processing phase practiced using advanced curing equipment according to principles of the invention. The Heating (energy source) provides energy to system to promote water evaporation from the concrete part during drying and curing, and to grow crystals within the concrete part during curing. The Water Extraction (a) opens passageways within the porous concrete part to allow CO2 infiltration and (b) removes water from the system to promote addition evaporation. The Circulation (a) promotes atmosphere uniformity throughout the system and (b) facilitates water extraction.
FIG. 1E is a schematic diagram that illustrates exemplary embodiments of a second processing phase practiced using advanced curing equipment according to principles of the invention. The CO2 Delivery and Control provides CO2 to chamber, maintains target CO2 concentrations during drying and curing, and ramps down CO2 concentration prior to the completion of curing, as defined by Closed-loop Process Control.

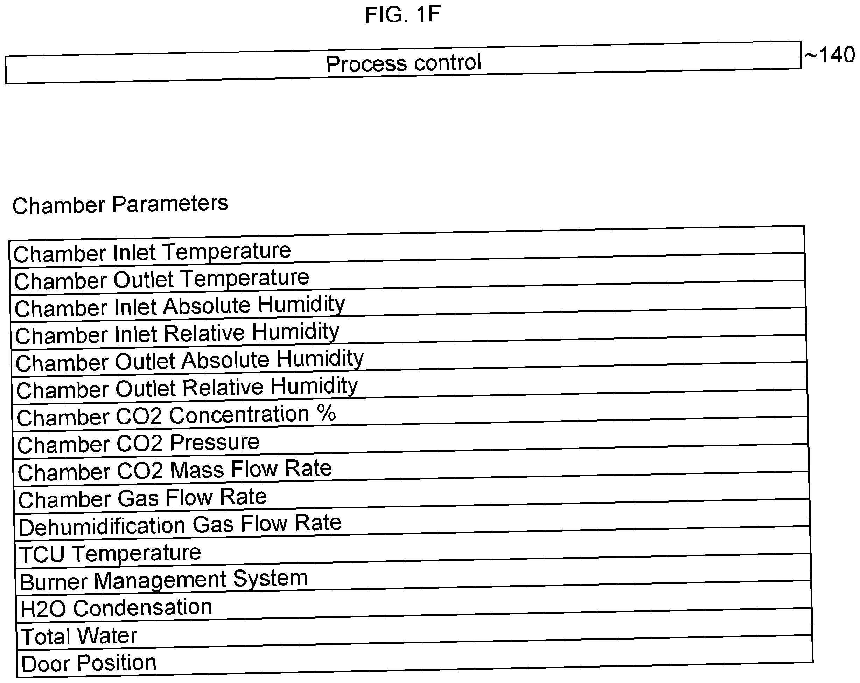

FIG. 1F is a schematic diagram that illustrates exemplary embodiments of parameters that are measured that relate to the chamber characteristics of chambers and exemplary embodiments of material parameters that are measured during processing in advanced curing equipment according to principles of the invention. The Process control 140 receives and utilizes input parameters from System Sensors and Product/Location Sensors for achieving required process conditions for CO2-curing of concrete under feedback control. Optionally allows feedforward control (open loop control).

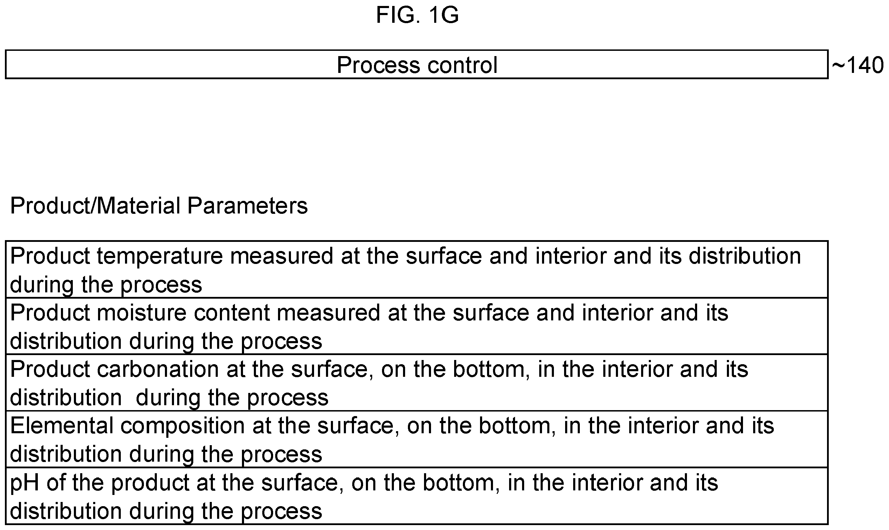

FIG. 1G is a schematic diagram that illustrates exemplary embodiments of process control components of the apparatus according to principles of the invention. The Process control 140 receives and utilizes input parameters from System Sensors and Product/Location Sensors for achieving required process conditions for CO2-curing of concrete under feedback control. Optionally allows feedforward control (open loop control).

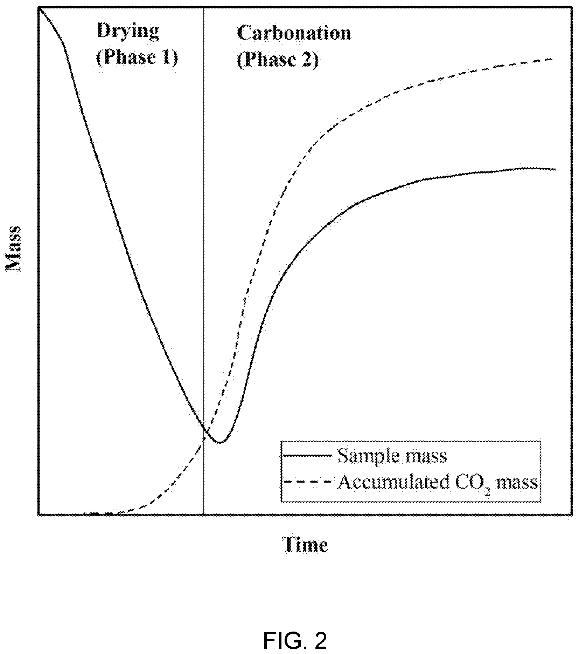

FIG. 2 is a schematic graph that illustrates the mass of a CO₂ Composite Material (CCM) that is being cured as a function of time during COi-curing.

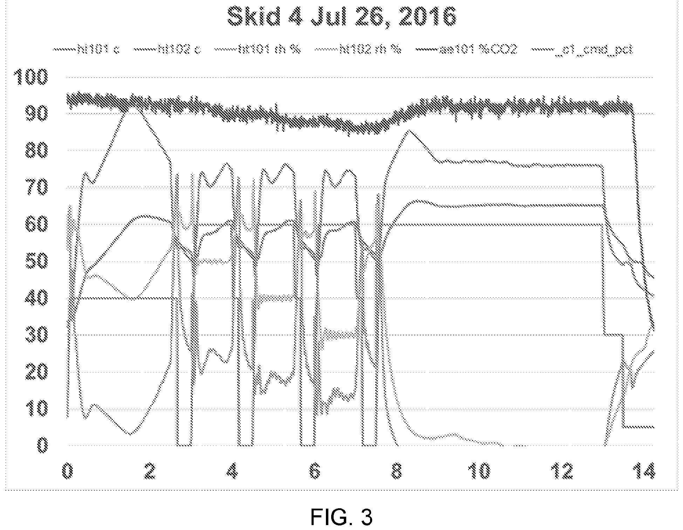

FIG. 3 shows the mass and CO₂ uptake of a sample during curing which illustrates the separate Phase 1 drying and Phase 2 carbonation.
FIG. 3 is a diagram illustrating data for curing Example 1.
FIG. 4A illustrates the sample temperature and RH profile during phase I drying in curing Example 2.
FIG. 4B illustrates the sample temperature and RH profile during phase II carbonation in curing Example 2.
FIG. 4C illustrates the sample temperature and RH profile during phase III carbonation in curing Example 2.
FIG. 5A is a graph illustrating a system curing profile in curing Example 3.
FIG. 5B is a graph illustrating a system curing profile in curing Example 3.
FIG. 5C is a graph illustrating sample surface resistance data and system curing profiles for curing Example 3.
FIG. 6 is a graph that illustrates the differences in reaction depth, gas flow in cubic feet per minute (cubic meter per hour) and amount of water removed from specimens of CO₂ Composite Material cured in systems using 1 fan and 3 fans.
FIG. 7 is a graph showing data for water removal rate as a function of flow rate for gases having different relative humidity.
FIG. 8 is a graph showing the calculated temperature behavior with time for drying alone and for carbonation alone, obtained by de-convolution.
Figs. 9 through 12 are part of the prior art description found in U.S. Patent No.9,266,147, issued February 23, 2016 as Figs. 1-4 therein.

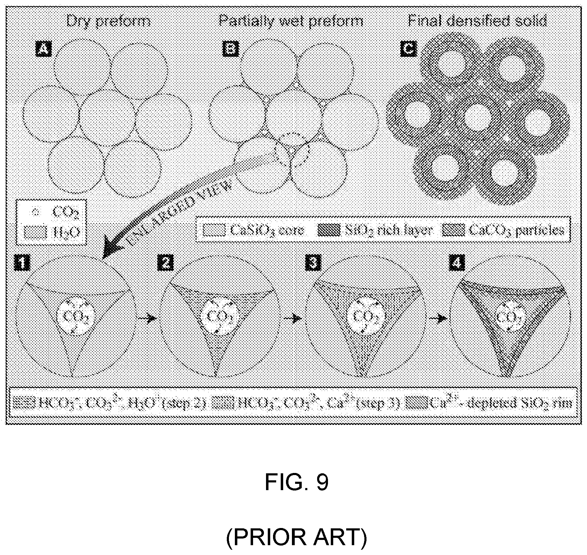

FIG. 9 represents g-rHLPD process Schematic. A--Dried porous CaSiO₃ preform; B--Partially wet CaSiO₃ preform; C--Final densified monolithic solid. Steps 1 to 4 represent the carbonation-densification process occurring in an individual pore: Step 1-Partially wet pore with CO₂; Step 2--Diffusion, dissolution and dissociation of CO₂; Step 3-Dissolution of CaSiO₃ by hydrogen ions; Step 4--Precipitation of solids. After the completion of step 4, the process takes place continuously following steps 2-4 until various kinetic factors slow down the process (e.g., thick CO₂ reaction layers).

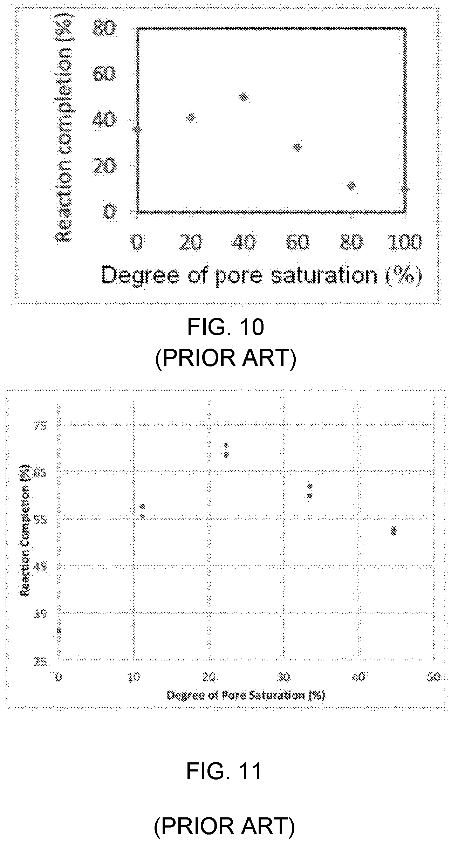

FIG. 10 represents a first example of carbonation reactions involving CO₂ as a gas phase and liquid water in the pore structure.
FIG. 11 represents a second example of carbonation reactions involving CO₂ as a gas phase and liquid water in the pore structure: Carmel Quartz Composition, 8 × 8 × 1.5" (20.3 × 20.3 × 2.5 cm) Vibratory Cast reacted, 90 C, 20 PSIG (1.38 bars) reaction.

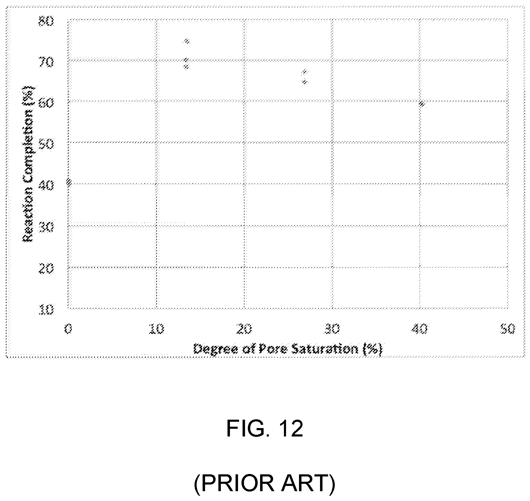

FIG. 12 represents a third example of carbonation reactions involving CO₂ as a gas phase and liquid water in the pore structure: 1-2-3 Composition, 8 × 8 × 2" (20.3 × 20.3 × 5.08 cm) sample size reacted at 90 C 20 PSIG (1.38 bars), at -90% Relative humidity.

### DETAILED DESCRIPTION

The apparatus of the invention is useful for curing materials that require CO₂ for curing. The materials do not cure in the presence of H₂O alone. The materials do not cure in the absence of CO₂. The materials do not consume water as a reagent.

The invention features a curing system for curing a material which requires CO₂ as a curing reagent. The curing system comprises a curing chamber configured to contain a material that consumes CO₂ as a reactant (or reagent) and that does not cure in the absence of CO₂. The curing chamber has at least one port configured to allow the material to be introduced into the curing chamber and to be removed from the curing chamber, and has at least one closure for the port, the closure configured to provide an atmospheric seal when closed so as to prevent (or to limit to an innocuous level) contamination of a gas present in the curing chamber by gas outside the curing chamber; a source of carbon dioxide configured to provide gaseous carbon dioxide to the curing chamber by way of a gas entry port in the curing chamber, the source of carbon dioxide having at least one flow regulation device configured to control a flow rate of the gaseous carbon dioxide into the curing chamber; a gas flow subsystem configured to circulate the gas through the curing chamber during a time period when the material that consumes CO₂ as a reactant is being cured; a temperature control subsystem configured to control a temperature of the gas within the chamber; a humidity control subsystem configured to control a humidity in the gas within the chamber to increase or decrease humidity; and at least one controller in communication with at least one of the source of carbon dioxide, the gas flow subsystem, the temperature control subsystem, and the humidity control subsystem; and at least one controller configured to control independently during a time period when the material that consumes CO₂ as a reactant is being cured at least a respective one of the flow rate of the gaseous carbon dioxide, the circulation of the gas through the curing chamber, the temperature of the gas, and the humidity in the gas.

The invention involves the recognition that the drying sub-process and the carbonation sub-process in the curing of CO₂ composite material are directly coupled to each other, so that the carbonation rate and extent can be controlled by controlling the drying rate.

The description of curing chambers and their operation are described in U.S. Patent No. 9,211,027, U.S. Patent Application Serial No. 14/602,313, and U.S. Patent Application Serial No. 14/818,629.

The absolute pressure of the curing process executed in said chamber takes place at fewer than 5 atmospheres in order to avoid the use of complex, pressure-rated components. Preferably, the process takes place between 0.68 - 1.36 atmospheres (10-20 psi) absolute pressure. More preferably, the process takes place between 0.98 - 1.02 atmospheres (14.5-14.9 psi) absolute pressure.

In some embodiments of the invention, portions of the process may proceed at less than atmospheric pressure in order to facilitate the evaporation of water from the products to be cured.

Disclosed is a process that maximizes the carbonation rate of a composite material by controlling the drying rate of that material. The process can include a carbonation duration that is between 0 and 1,000 hours. The process can include a CO₂ Composite Material that has a permeability in the range of 0% to 100%. In some embodiments, the permeability within the range of 0% to 100% can have an upper bound or a lower bound of a respective one of 5%, 10%, 15%, 20%, 25%, 30%, 35%, 40%, 45%,50%, 55%, 60%, 65%, 70%, 75%, 80%, 85%, 90% or 95%.

The process can include a CO₂ Composite Material that has a carbonation depth of the CCM in the range of 0 and 36 inches (0 cm to 91 cm). The process can include a CO₂ Composite Material wherein the amount of water removed from the CCM is equal to between 0% and 99% of the CCM mass. In some embodiments, the amount of water removal is in the range of 10-90%, 15-90%, 20-90%, 25-90%, 30-90%, 35-90%, 40-90%, 45-90%, or 50-90% of the CCM mass.

In some embodiments, the amount of water removal is in the range of 10-85%, 15-85%, 20-85%, 25-85%, 30-85%, 35-85%, 40-85%, 45-85%, or 50-85% of the CCM mass.

In some embodiments, the amount of water removal is in the range of 10-80%, 15-80%, 20-80%, 25-80%, 30-80%, 35-80%, 40-80%, 45-80%, or 50-80% of the CCM mass.

In some embodiments, the amount of water removal is in the range of 10-75%, 15-75%, 20-75%, 25-75%, 30-75%, 35-75%, 40-75%, 45-75%, or 50-75% of the CCM mass.

In some embodiments, the amount of water removal is in the range of 10-70%, 15-70%, 20-70%, 25-70%, 30-70%, 35-70%, 40-70%, 45-70%, or 50-70% of the CCM mass.

In some embodiments, the amount of water removal is in the range of 10-65%, 15-65%, 20-65%, 25-65%, 30-65%, 35-65%, 40-65%, 45-65%, or 50-65% of the CCM mass.

A curing process for carbonatable calcium silicate concretes is defined as a process wherein concrete products are produced using carbonatable calcium silicate cements and exposed to CO₂ in a controlled manner to produce a cured concrete part with desirable physical and/or chemical properties.

Concrete products containing carbonatable calcium silicate cements as their primary cementitious binding agent harden during the reaction process. Monitoring the mass and CO₂ consumption of a concrete body during the curing process reveals two distinctive phases during curing. This is demonstrated in FIG. 2. The first phase is a drying phase, where minimal or no consumption of CO₂ occurs but the mass of the product decreases as water is evaporated from the product to the chamber atmosphere. The second phase is a carbonation phase, where the rate of CO₂ consumption increases and the mass gain from carbonation exceeds the mass loss from drying. The rate of CO₂ consumption and subsequent mass gain of the solid decreases as the carbonation reaction process approaches its maximum yield for the specific product and conditions employed in the curing process. Thus, the curing process is comprised of two distinct phases, a drying phase (Phase 1) and a carbonation phase (Phase 2). In particular, the vertical axis is labeled Mass. The units used to designate mass for the sample mass which includes water as well as the solid substances in the sample (designated by a solid curve) and the accumulated CO₂ mass (designated by a dotted curve) can have different scales. That is, the addition of CO₂ to a material to be cured in general represents a significantly smaller absolute mass than the mass of the material to be cured, because CO₂ has a molecular weight of approximately 44 atomic units, while most solids comprise multiple chemical elements such as Ca, Mg and Si that individually have atomic masses of approximately 40, 24 and 28 atomic units, respectively.

The extent and duration of Phase 1 and Phase 2 may vary depending on product formulation, the concrete raw materials, the properties of the cement and binder components, the product density, the product geometry, the use of chemical additives, and the conditions applied during the curing process.

The transition from the first drying phase (Phase 1) to the second carbonation phase (Phase 2) is associated with a change in the electrical properties of the product on the surface or in the bulk. In some embodiments, one or multiple electrical properties, such as, the resistivity, conductivity, impedance, capacitance, dielectric constant, dielectric strength, permittivity, piezoelectric constant, Seebeck coefficient of the product may change.

In some other embodiments not forming part of the invention, the transition from the first drying phase (Phase 1) to the second carbonation phase (Phase 2) is associated with a change in the quantity of water is removed from the product. In some embodiments, the quantity of water removed from the product is measured through tracking the mass change of the product throughout the process in any of the first drying phases (Phase 1) or any of the second carbonation phases (Phase 2).

In some other embodiments not forming part of the invention, the transition from the first drying phase (Phase 1) to the second carbonation phase (Phase 2) is associated with a change in the rate of water removed from the product. In some embodiments, the rate at which water extracted from the product is measured, tracked and controlled throughout the process in any of the first drying phases (Phase 1) or any of the second carbonation phases (Phase 2).

In some other embodiments not forming part of the invention, the transition from the first drying phase (Phase 1) to the second carbonation phase (Phase 2) is associated with a change in the rate of water collected from the gas circulating in the chamber. In some embodiments, the rate at which water is collected from the gas circulating in the chamber is measured, tracked and controlled throughout the process in any of the first drying phases (Phase 1) or any of the second carbonation phases (Phase 2).

In some other embodiments not forming part of the invention, the transition from the first drying phase (Phase 1) to the second carbonation phase (Phase 2) is associated with a change in the CO₂ and/or O₂ concentration in the gas circulating in the chamber. In some embodiments, the CO₂ and/or O₂ concentration of the gas circulating in the chamber is measured, tracked and controlled throughout the process in any of the first drying phases (Phase 1) or any of the second carbonation phases (Phase 2).

In some other embodiments not forming part of the invention, the transition from the first drying phase (Phase 1) to the second carbonation phase (Phase 2) is associated with a change in the relative humidity of the gas circulating in the chamber. In some embodiments, the relative humidity of the gas circulating in the chamber is measured, tracked and controlled throughout the process in any of the first drying phases (Phase 1) or any of the second carbonation phases (Phase 2).

In some other embodiments not forming part of the invention, the transition from the first drying phase (Phase 1) to the second carbonation phase (Phase 2) is associated with a change in temperature of the gas circulating in the chamber. In some embodiments, the temperature of the gas circulating in the chamber is measured, tracked and controlled throughout the process in any of the first drying phases (Phase 1) or any of the second carbonation phases (Phase 2).

In some other embodiments not forming part of the invention, the transition from the first drying phase (Phase 1) to the second carbonation phase (Phase 2) is associated with a change in temperature of the gas circulating in the chamber. In some embodiments, the temperature of the gas circulating in the chamber is measured, tracked and controlled throughout the process in any of the first drying phases (Phase 1) or any of the second carbonation phases (Phase 2).

In some other embodiments not forming part of the invention, the transition from the first drying phase (Phase 1) to the second carbonation phase (Phase 2) is associated with a change in temperature of the product. In some embodiments, the temperature of the product is measured, tracked and controlled throughout the process in any of the first drying phases (Phase 1) or any of the second carbonation phases (Phase 2). In some embodiments, the change in temperature of the product is monitored using an infrared camera.

In some other embodiments not forming part of the invention, the transition from the first drying phase (Phase 1) to the second carbonation phase (Phase 2) is associated with a change in the pressure inside the chamber. In some embodiments, the pressure inside the chamber is measured, tracked and controlled throughout the process in any of the first drying phases (Phase 1) or any of the second curing phases (Phase 2).

In some other embodiments not forming part of the invention, the transition from the first drying phase (Phase 1) to the second carbonation phase (Phase 2) is associated with a change in the pH of the product. In some embodiments, the pH of the product is measured, tracked and controlled throughout the process in any of the first drying phases (Phase 1) or any of the second carbonation phases (Phase 2).

In some other embodiments not forming part of the invention, the transition from the first drying phase (Phase 1) to the second carbonation phase (Phase 2) is associated with a change in the pH of the water collected during the process from the products and subsequently from the chamber. In some embodiments, the pH of the water collected during the process from the products and subsequently from the chamber is measured, tracked and controlled throughout the process in any of the first drying phases (Phase 1) or any of the second carbonation phases (Phase 2).

In some other embodiments not forming part of the invention, the transition from the first drying phase (Phase 1) to the second carbonation phase (Phase 2) is associated with a change in the elemental composition of the product. In some embodiments, the elemental composition of the product is measured, tracked and controlled throughout the process in any of the first drying phases (Phase 1) or any of the second carbonation phases (Phase 2).

In some other embodiments not forming part of the invention, the transition from the first drying phase (Phase 1) to the second carbonation phase (Phase 2) is associated with a change in the response of the product to ultrasonic stimulation. In some embodiments, the response of the product to ultrasonic stimulation is measured, tracked and controlled throughout the process in any of the first drying phases (Phase 1) or any of the second carbonation phases (Phase 2).

In an aspect, the control of product temperature and water removal in the first drying phase (Phase 1) and the rate of reaction in the second carbonation phase (Phase 2) is controlled, and in some instances expedited, through selection of an energy source.

In some embodiments, the energy source used for heating the gas and/or the product is fossil fuel combustion.

In some embodiments, the energy source used for heating the gas and/or the product is electrical resistance heating.

In some embodiments, the energy source used for heating the gas and/or the product is an infrared heat source.

In some other embodiments, the energy source used for heating the gas and/or the product is a laser.

In some embodiments, the energy source used for heating the gas and/or the product is dielectric heating, wherein dielectric heating may employ the use of waves of microwave frequency or radio frequency. In some embodiments, the radio frequencies used is in the Industrial, Science and Medical band (ISM band).

In some other embodiments, the energy source used for heating the gas and/or the product is plasma.

In some other embodiments, the energy source used for heating the gas and/or the product is steam.

In some other embodiments, the energy source used for heating the gas and/or the product is superheated steam.

In some other embodiments, the energy source used for heating the gas and/or the product is conduction.

In some other embodiments, the energy source used for heating the gas and/or the product is a radiator.

In some other embodiments, the energy source used for heating the gas and/or the product is a radiation heat source.

In some other embodiments, the energy source used for heating the gas and/or the product is a heat source such as co-generation facility.

In some other embodiments, the energy source used for heating the gas and/or the product includes a combination of the heat sources described above.

In an aspect, the control of the water removal in the first drying phase (Phase 1) and/or the rate of reaction in the second carbonation phase (Phase 2) is controlled, and in some instances expedited, through control of the water extraction from the product and subsequently from the gas in the chamber.

In some embodiments, the water extraction from the product and subsequently from the chamber is controlled through natural convection.

In some embodiments, the water extraction from the product and subsequently from the chamber is controlled through forced convection.

In some embodiments, the water extraction from the product and subsequently from the chamber is controlled through a compressor.

In some embodiments, the water extraction from the product and subsequently from the chamber is controlled through a desiccant.

In some embodiments, the water extraction from the product and subsequently from the chamber is controlled through a heat exchanger/chiller.

In some embodiments, the water extraction from the product and subsequently from the chamber is controlled through the use of lower than atmospheric pressure regimes including but not limited to vacuum.

In some other embodiments, the water extraction from the product and subsequently from the chamber is controlled through the use of a combination of processes described above.

In an aspect, the control of the water removal in the first drying phase (Phase 1) and/or the rate of reaction in the second carbonation phase (Phase 2) is controlled, and in some instances expedited, through control of the circulation of the gas in the chamber. In some embodiments, the velocity of the gas local to the products is controlled through adjusting the flow of the gas in the chamber.

In some embodiments the flow of the gas is controlled using an engineered plenum.

In some embodiments the flow of the gas and the velocity of gas over the products are controlled using an internal circulation system. In some embodiments the engineered internal circulation inside the chamber comprises of fans that move the gas inside the chamber.

In some embodiments the flow of the gas is controlled using an external circulation system. In some embodiments the engineered external circulation system comprises of fans that move the gas between the interior and exterior of the chamber.

In some embodiments the flow of the gas is controlled using an internal circulation system and an external circulation system in tandem. In some embodiments the flow of gas is proportioned between the internal circulation system and the external circulation system by means of a bypass.

In some embodiments a curing system comprises multiple internal circulation systems, external circulation systems, heaters, and dehumidification systems may be affixed to one chamber providing multiple independent control zones within the chamber.

In an aspect, the efficiency of CO₂ consumption during the curing process is maximized by adjusting the CO₂ concentration at the end of the carbonation phase (Phase 2) and/or the final drying phase. More specifically, the CO₂ concentration is allowed to drop in the chamber during the carbonation phases as the CO₂ uptake rate by the product decreases. This assists with the conservation of the CO₂, which is essential from both a cost and an environmental consideration.

### Example 1

A curing method utilizing alternating cycles of increasing and decreasing evaporation rates was used to achieve comparable strengths of carbonatable calcium silicate cement concrete pavers in a shorter run time than a run based on strictly constant drying conditions.

### Methodology

A curing chamber was loaded with carbonatable calcium silicate cement concrete pavers. Previous measurements indicated a distribution of relative evaporation rates throughout the chamber. Electrical resistance sensors were placed on the surfaces of products at locations known to have relatively high and relatively low evaporation rates.

The curing process commenced by introducing CO₂ to the chamber and gas conditioning system until a high concentration was reached. Next, flow, heat, and system dehumidification were adjusted to reach a desired temperature and relative humidity. The chamber reached 60°C in 2.5 hours and the relative humidity was maintained at or below 60%.

At the 2.5 hour mark, the evaporation rate in chamber was reduced. Reduction of the drying conditions was achieved by: stopping the heater and, and stopping the gas circulation system. This decreased evaporation rate condition was maintained for 30 minutes before the standard drying conditions were reestablished by restarting the heater and gas circulation system. The original evaporation conditions were then maintained for 1 hour before beginning another cycle of reduction in drying conditions. The exact timing of the transitions between the normal evaporation and decreased evaporation regimes was determined by monitoring the electrical resistance of the product surfaces. A total of four cycles of were completed before the system entered an intense drying step of 65°C, high gas flow/velocity, and very low relative humidity. The total duration of the curing process was 13 hours.

The curing process utilized was developed in order to help unify the moisture removal levels throughout the product in the chamber. By reducing the internal recirculation velocity, the evaporation rate at the surface of the products is diminished. This provides an opportunity for water to transport from the interior of the product to the exterior of the product, thus reducing the moisture gradient within each product. By introducing such stalling processes certain products that could develop an unfavorable steep moisture gradient during phase 1 drying due to relatively high local evaporation rates can instead be dried in a manner where a favorable shallow moisture gradient is created by the end of phase 1 drying.

Experimental data is shown in FIG. 3.

### Example 2

Carbonatable calcium silicate cement based concrete cylinders were produced to study a curing process including phase 1 drying in the absence of CO₂. The mixture proportions used for production of fresh concrete is shown in Table 1. The fresh properties of concrete produced using the materials as per quantities in Table 1 are shown in Table 2.

**Table 1: The mixture proportions of the concrete produced for Example 2 (1/4" = 6.3 5 mm; 3/8" = 9.53 mm)**

| **Component** | **Mass** | **Batch quantity, kg** | **kg/m³ or l/m³** |
|---|---|---|---|
| **Carbonatable calcium silicate cement** | 17.3% | 13.90 | 415.4 |
| **Const. sand** | 38.1% | 31.91 | 915.8 |
| **1/4" aggregates** | 24.3% | 19.48 | 582.3 |
| **3/8" aggregates** | 20.3% | 16.21 | 484.5 |
| **water-reducing admixture** | 5 | 0.073 | 2.07 |
| **set-retarding admixture** | 7 | 0.0973 | 2.90 |
| **Water** | 5.50 % | 4.68 | 139.5 |

**Table 2: The fresh properties of the concrete produced for Example 2.**

| **Parameter** | **Value** |
|---|---|
| **Slump, mm (inches)** | 38.1 (1.5) |
| **Air content, %** | 5.0 |
| **Unit weight, kg/m³ (lb/cft)** | 2374.26 (148.22) |

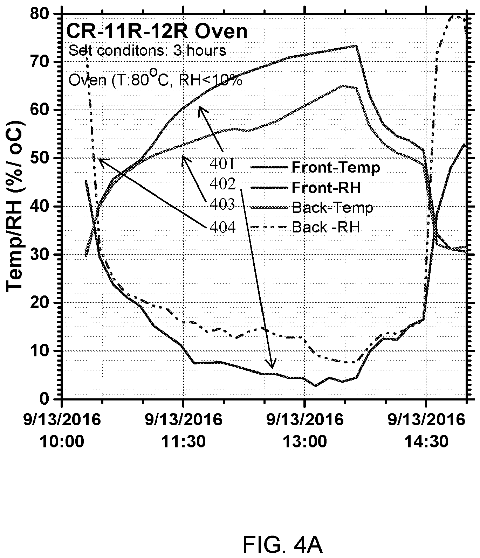

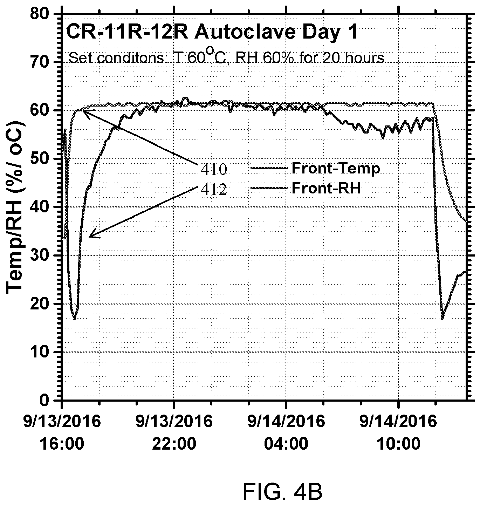

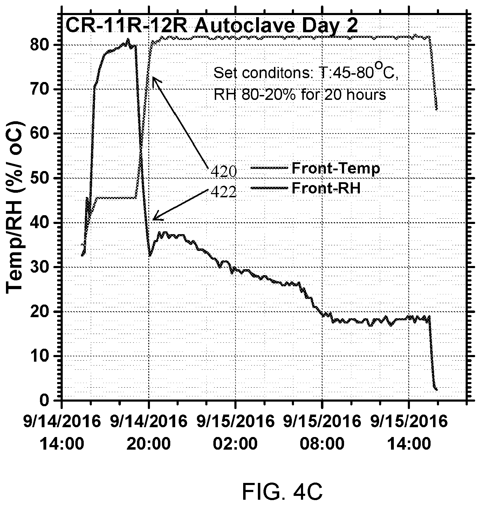

The mixing procedure used to produce the concrete was as below.
1) Add all of the coarse aggregates into the mixer.
2) Add all sand into the mixer to produce the dry aggregate mix.
3) Mix the dry mix for 30 seconds.
4) Add 50% of the mixing water to produce the wet aggregate mix.
5) Add cement into the mixer to produce the wet concrete mix.
6) Add set retarding admixtures, such as but not limited to, Sika Plastiment into the mixer and mix it for 30 seconds.
7) Add remaining 50% of the mixing water and mix for 30 seconds.
8) Add water reducing admixture, such as but not limited to, Glenium 7500 and mix for 3 minutes.
9) Rest the mixer for 1 minute.
10) Measure Slump of the fresh concrete.
11) Measure the unit weight and air content of the fresh concrete.
12) 16 4×8" (10.2 × 20.3 cm) Cylinders are cast with the fresh concrete mix in 2-3 layers with about 30 seconds of vibration for each layer.
13) Put the concrete specimens in an oven with temperature set at 80°C for 3 hours (FIG. 4A).
14) Remove the specimens from the oven after 3 hours of oven drying and cool at ambient conditions for 1 hour.
15) Weigh the specimens to calculate the amount of moisture lost during the drying state (Phase 1).
16) Demold the specimens and put them in a curing chamber for carbonation (Phase 2) at 60°C and 60% RH for 20 hours with >95% CO₂ gas concentration. (FIG. 4B).
17) The specimens were further carbonated (continuation of Phase 2) at 80°C and 30% RH for 20 hours with >95% CO₂ gas concentration. (FIG. 4C).

The average compressive strength for cured concretes (4x8" (10.2 × 20.3 cm) cylinders) after 40 hours of carbonation was observed to be 9388 psi (647.3 bars).

### Example 3:

The mixture proportions used for the production of a wet-cast concrete product for example 3 are shown in Table 3. The concrete was prepared by dry-mixing cement and aggregates, then introducing water and aggregates, and finally wet-mixing the entire batch. Fresh concrete was tested for spread, unit weight, air content and tendency to segregate. Fresh mix yielded unit weight of 144 lb/ft³ (2307 kg/m³), air content of 7% and spread of 20 inches (50.8 cm). The mix did not segregate. The concrete was poured directly into 24" × 24" × 1.5" (61 × 61 × 2.5 cm), 24" × 18" × 1.5" (61 × 45.7 × 2.5 cm) and 24" × 12" × 1.5" (61 × 30.5 × 2.5 cm) ABS plastic mold cavity and briefly consolidated via gentle tapping of the mold. (1 inch = 2.54 cm)

**Table 3: Mixture proportions of the concrete produced for example 3 (1/4" = 6.4 mm).**

| **Component** | **Proportion** (**lb/ft³**) |
|---|---|
| Carbonatable calcium silicate cement | 645 lb/ft³ (10332 kg/m³) |
| Slag | 270 lb/ft³ (4325 kg/m³) |
| 1/4" (-) Trap Rock | 1647 lb/ft³ (26382 kg/m³) |
| Sahara Concrete Sand | 1007 lb/ft³ (16131 kg/m³) |
| Water | 321 lb/ft³ (5142 kg/m³) |
| Water repelling admixture | 0.4 oz/lb cementitious (0.03 L/kg) |
| Water reducing admixture | 6 oz/lb cementitious (0.4 L/kg) |
| Set retarding admixture | 3 oz/lb cementitious (0.2 L/kg) |

The ABS mold containing the wet cast specimen was loaded into a curing chamber. Two curing processes were investigated. The duration of each investigated curing process was 14 hours.

In curing process A, the curing chamber was purged to achieve a high CO₂ concentration (>90%). The heater and gas circulation system were controlled to achieve a temperature of 60°C and a relative humidity of 25% or lower. The electrical resistance of the product surface was monitored. The curing ran for 14 hours. The electrical resistance of the product surface was observed to depart from the electrical resistance of the green concrete body at hour 4. The change in electrical resistance of the product surface indicated a transition between a drying-dominant phase to a carbonation-dominant phase.

In curing process B, the curing recipe was modified so that the evaporation rate of the sample was reduced during the carbonation phase in order to enhance the extent of the carbonation curing. First, the curing chamber was purged to achieve a high CO₂ concentration (>90%). The heater and gas circulation system were controlled to achieve a temperature of 60°C and a relative humidity of 25% or lower. After 4 hours, as indicated by the change in electrical resistance of the product surface, the gas circulation settings were modified to create a high humidity in the chamber and thus reduce the evaporation rate for three hours. Following this low evaporation rate step, the gas circulation system settings were modified to gradually increase the evaporation rate by capping the chamber relative humidity at 50% for two hours. Following this the gas circulation system and heater settings were modified to increase the gas temperature 70°C and cap the chamber relative humidity at 25% for the remainder of the run.

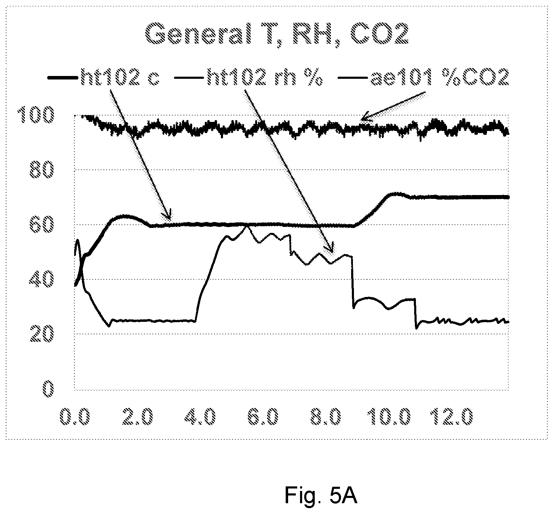

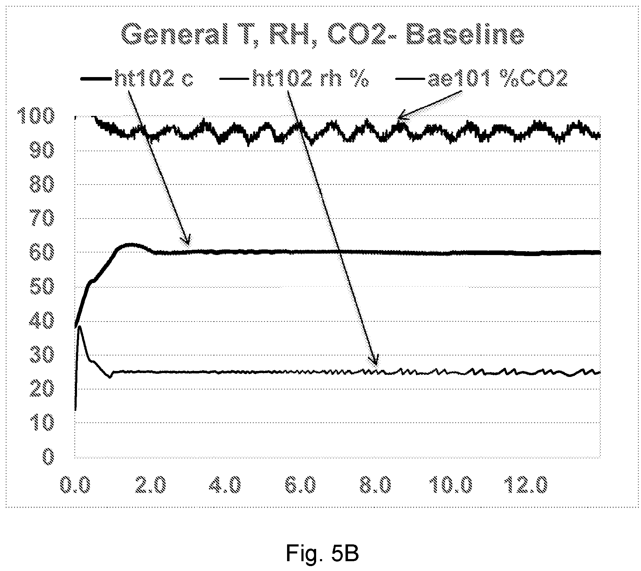

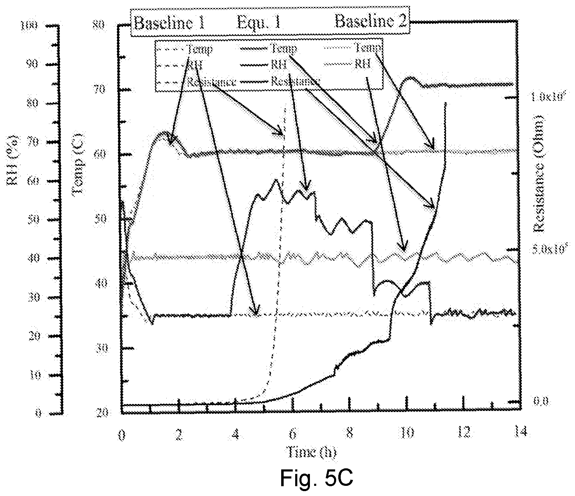

The chamber temperature, chamber relative humidity, and the electrical resistance of the sample surface for curing process A and curing process B are illustrated in FIG. 5C.

The flexural strength of the products cured during process A and process B was measured. The products were also cut in half in order to ascertain if they had carbonated uniformly. The product cured using process A had a flexural strength of 620 psi (4275 kPa) and was observed to possess a weak, poorly carbonated region in its center. The product cured using process B had a flexural strength of 789 psi (5440 kPa) and observed to be strong and carbonated through its entire thickness. The result of this test provides evidence that reducing the evaporation rate during the carbonation phase of the concrete curing process can enhance the curing process.

### Radio Frequency Curing:

### Example 4:

Several carbonatable calcium silicate cement based pavers were placed on an RF compatible board with various temperature sensors in place. The samples were loaded into the RF system and brought to a temperature of 60°C for 5min, then 70°C for 10min, and then to 90°C for 10min. All temperatures were monitored over time and visual observations were also made. At the end of the 25 minute test, multiple samples were taken from various locations for moisture analysis.

All carbonatable calcium silicate cement based pavers heated and dried effectively. The internal and external temperatures were both +/- 5 degrees Celsius. The discrepancy between measured moisture content from center to top on a single paver was between 0.25% and 1.05%.

### Example 5:

8 carbonatable calcium silicate cement based pavers were loaded into the RF system in 4 separate RF compatible bins. CO₂ was flowed slowly into the bottom corner of the bins and out the top on the opposite side. The samples were brought up to 60°C with RF over approximately 10 min and held for 1 hour before testing the first sample (1300W for 10minutes to get to 60°C, then -12W /paver to maintain 60°C). A sample was pulled and tested every half an hour, then returned to the CO₂ environment in the RF system. For the last half hour the sample temperature was brought to 85°C. The total CO₂ exposure time was 5 hours. One sample was broken in half and appeared hard and carbonated throughout.

It is possible to cure pavers inside of a Radio Frequency based curing system and it can be done in a short timeframe.

### Example 6:

8 carbonatable calcium silicate cement based pavers were placed into the RF system with temperature sensors embedded in them and the temperature was brought up to 85°C.

The internal paver temperature reached 60°C in 1 minute and 85°C in 2 minutes.

### Example 7:

Carbonatable calcium silicate cement based cement pavers were placed into the RF system with temperature sensors embedded in them and brought to 85°C in 2 minutes. Samples were removed, moisture content was measured, and water distribution was observed. Several iterations of this experiment were run making minor adjustments to the machine.

The samples measured moisture content indicated that they lost between 30% and 50% of their moisture within two minutes of RF exposure.

### Example 8:

8 carbonatable calcium silicate cement based pavers were loaded into the RF system in 4 separate RF compatible bins. Temperature sensors were embedded into samples in each bin. CO₂ was flowed slowly into the bottom corner of the bins and out the top on the opposite side. The samples were brought up to 85°C in approximately 3min and 50 seconds and held for 3 hours (8kW for 3min50sec to get to 85°C, then -200W or 25W/paver to maintain 85°C).

The centers of the pavers were extremely hard, while the surface and corners were somewhat soft. This result provides evidence that further optimization and development of the RF based curing system could yield extremely fast curing times.

### Example 9:

8 carbonatable calcium silicate cement based pavers were placed into the RF system with temperature sensors embedded in 2 of them and the temperature was brought up to 85°C in 2 minutes. Samples were removed, half of them were sprayed with water to re-wet the surface and half of them were not. The two sets of 4 samples were then placed into plastic containers with heated CO₂ flowing slowly into the bottom corner and out the top. After 3 hours a sample was pulled from each container, broken in half and inspected, one additional was removed from each container and put aside. The samples that were not re-wet appeared to be cured in the center, but the surface and corners appeared to be soft and dusty. The re-wet samples had a hard surface and also appeared to be cured in the center.

Carbonatable calcium silicate cement based pavers can be heated and dried using Radio Frequency and then cured in a CO₂ environment without the use of Radio Frequency. Using Radio Frequency only during the first heat-up and drying phase of the process can still reduce the total process time significantly. Re-wetting of the surface appeared to be beneficial after a very rapid heat up phase.

### WATER REMOVAL

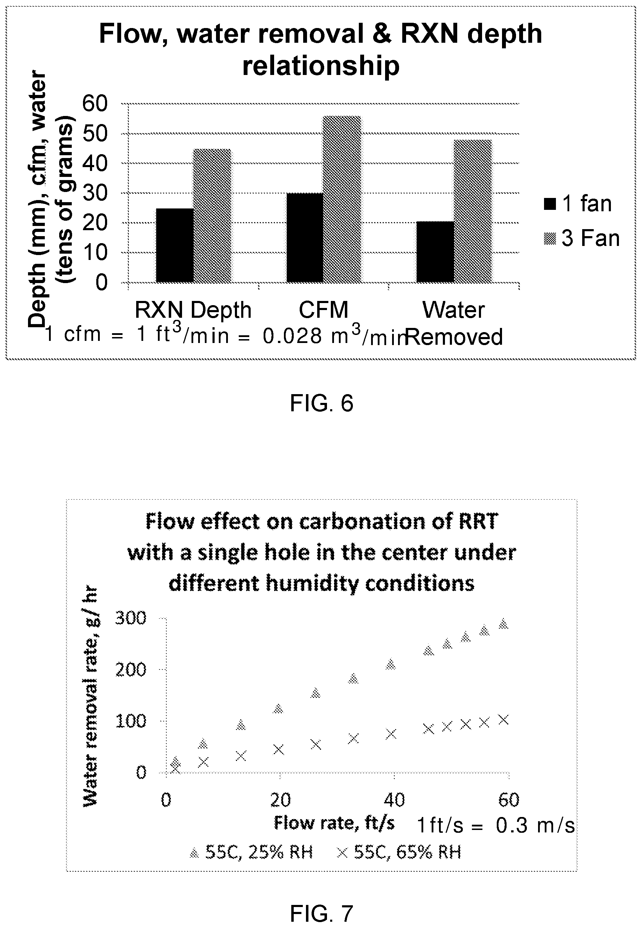

FIG. 6 is a graph that illustrates the differences in reaction depth, gas flow in cubic feet per minute (m³/min, 1ft³/min = 0.028 m³/min) and amount of water removed from specimens of CO₂ Composite Material cured in systems using 1 fan and 3 fans. It is apparent that reaction depth, gas flow in cubic feet per minute (m³/min) and amount of water removed from specimens of CO₂ Composite Material all increase when more capacity to move the reactive gas is provided.

FIG. 7 is a graph showing data for water removal rate as a function of flow rate for gases having different relative humidity. As is seen in FIG. 7, using a higher flow rate and a lower relative humidity tends to increase the rate at which water is removed from the sample. It is believed that the reaction of CCM with CO₂ occurs preferentially at the interface where water-saturated CCM is in contact with gaseous CO₂, so more rapid removal of water correlates with faster rates of cure.

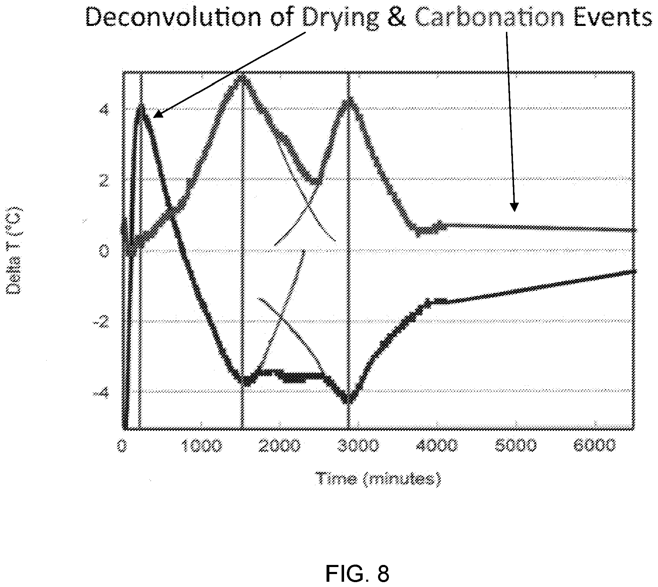

FIG. 8 is a graph showing the calculated temperature behavior with time for drying alone and for carbonation alone, obtained by de-convolution, as explained in USSN 14/602,313. FIG. 8 includes a comparison of the carbonation exotherm with the drying endotherm plotted on the same time scale. FIG. 8 indicates that drying can be used to control reaction speed and extent.

It emerges that during curing a drying front establishes itself and moves from the outside of the formed object toward its interior. A reaction front also forms almost coincident with the drying front. The curing reaction can only occur near the drying front/reaction front because CO₂ is supplied as a gas and is not present initially in the water at any significant concentration. In front of the drying front (e.g., on the wet side of the front) water is present in the pores, which inhibits CO₂ diffusion. Behind the front (e.g., on the dry side of the front) the pores contain too little water to support carbonation, but CO₂ can diffuse quickly to the region of the front and water can diffuse from the front back to the surface of the formed body. If these fronts move quickly through a region of the formed body the extent of reaction will be lower than if the fronts move slowly compared to the intrinsic rate of chemical reaction. The shape of the drying front will depend on the external shape of the formed body, the relative drying rates through its external surfaces and the diffusion distances from the front to the surface of the formed body.

### Additional Material

U.S. Patent No. 9,266,147.

In fluids, diffusional processes rate-limit a process when the thickness through which diffusion must occur is greater than the diffusion distance, which can be estimated by computation of root mean square displacement. For example, for a fluid with no convection, the diffusion of ions at room temperature and atmospheric pressure in water is approximately 0.19 cm. There are many applications where thicknesses of materials exceed this length scale. In these cases, mechanical convection of the fluid by any suitable means known to one of skill in the art is necessary. Another alternative is to introduce the solvent or reactive species as a gaseous species. When this is done, the diffusion distance increases to 9 cm. In further embodiments, supercritical conditions can be employed to achieve transport rates that lie between liquids and gases.

FIG. 9 represents g-rHLPD process Schematic. A--Dried porous CaSiO₃ preform; B--Partially wet CaSiO₃ preform; C--Final densified monolithic solid. Steps 1 to 4 represent the carbonation-densification process occurring in an individual pore: Step 1-Partially wet pore with CO₂; Step 2--Diffusion, dissolution and dissociation of CO₂; Step 3-Dissolution of CaSiO₃ by hydrogen ions; Step 4--Precipitation of solids. After the completion of step 4, the process takes place continuously following steps 2-4 until various kinetic factors slow down the process (e.g., thick CO₂ reaction layers).

For mineral silicate carbonation reactions to proceed quickly, the concept of gas-assisted HLPS or in other words, gas-assisted hydrothermal liquid phase densification, rHLPD (FIG. 9). g-rHLPD utilizes partially infiltrated pore space so as to enable gaseous diffusion to rapidly infiltrate the porous preform and saturate thin liquid interfacial solvent films in the pores with dissolved CO₂. CO₂-based species have low solubility in pure water (1.5 g/L at 25° C., 1 atm). Thus, a substantial quantity of CO₂ must be continuously supplied to and distributed throughout the porous preform to enable significant carbonate conversion. Utilizing gas phase diffusion offers a 100-fold increase in diffusion length over that of diffusing soluble CO₂ an equivalent time in a liquid phase. This partially infiltrated state enables the reaction to proceed to a high degree of carbonation in a fixed period of time. For example, in the partially infiltrated state, 47.5 ± 2.7 mol % conversion of CaSiO₃ into CaCO₃ and SiO₂ can be achieved in ~19 h at a temperature of 90° C. and a pressure of 2.36 atm. If all the same reaction conditions are maintained except that the pores are completely filled with water, a substantially lower carbonation conversion, 3.8 ± 0.5 mol %, results.

This work differs from published work, where no attention was paid to (1) the choice of water concentration relative to the degree of pore saturation (DPS) in the porous body throughout the porous preform both before and during reaction (e.g., in this case, carbonation) and (2) the methodology for how the water was delivered to the porous body. Instead, prior art used arbitrary amounts of residual water during the preparation of the porous preform, failing to recognize the importance of DPS and performed subsequent treatment in an autoclave containing CO₂ and water vapor without identifying optimum methods of water delivery during the reaction that maintain the DPS value at ones less than 100%. Controlling the water concentration and its method of delivery into the porous preform during LTS significantly influences the carbonation kinetics. To demonstrate this and the concept of practicing the DPS concepts to find conditions of enhanced reactivity and reaction yield (high fraction reacted), samples were reacted in a container made from a micro-porous Gore-Tex^{™} layer. Gore-Tex^{™} only allows water vapor species to and from the sample in a water-saturated atmosphere where the CO₂ activity is fixed at a pressure of 2.36 atm and a temperature of 90° C. A pool of water sets below the sample to saturate the atmosphere and co-exist with the water vapor in the reaction throughout the duration of the reaction. Thus, the chosen water content in the porous matrix is fixed by the equilibrating water vapor and no evaporation occurs in the porous matrix. Instead, the porous matrix redistributes the water in the matrix homogenously using capillary flow with no mass loss. For 19 h reactions, [when the DPS is increased from 0 to 60 vol %.], the degree of carbonation varies from 31.3 mol % to a maximum level of 49.6 mol % beyond this value, the degree of carbonation drops to 35.6 mol % when the DPS is increased to 80% and to 3.8 mol % when the DPS is 100%. These data demonstrate that optimum amounts of liquid water in the pores speeds up the reaction yield and rate because it is essential for ionization of both carbonic acid and calcium species. However, infiltrate solution levels need to be low enough such that CO₂ gas can diffuse into the porous matrix by gaseous diffusion prior to dissolution and diffusion in the pore-bound in water phase to the porous matrix solid/liquid interface. This is all schematically shown in FIG. 9.

Referring back to FIG. 9, the particle size distribution is monodisperse, while in many practical cases the particle size is polydisperse and the packing of the particles could adopt a wide variety of configurations that include hierarchic structures where the packing configurations repeat at each hierarchic level or change at each level. It is also conceivable that the packing structure can have long-range order, short-range order or adopt a random level of order at every length scale, whether the length scale is small, medium or large. Alternatively, short-range order may only persist on small length scale and random on the medium and large length scales. It is also possible that particles can pack with random order scale on the short length scale but then these regions of random order could be periodically distributed on the large length scale. From these examples, it is clear that particles can pack in many different configurations and the permutations are nearly infinite. Thus, there is no purpose to define all the possibilities. Accepting that the permutations are nearly infinite, it is conceivable that the packing density can vary from a small value that could be as high as 99 vol % with ordered hierarchic packing that repeats at large, medium and small length scales. Alternatively, the packing density could be as low as 0.04 vol % when the packing structure is characteristic of an aerogel, with fractal or dendritic packing in of particle or inorganic polymer in the porous matrix.

Given that the packing density can vary over a wide range, the amount of water required to saturate the pores with 99 vol % packing is a very small amount of water while the amount required to saturate pores with 0.04 vol % is a very large amount. Thus, if the requirement is to maintain open porosity to enable a rapid reaction between the gas phase and the water and the water and the solid phase, then it is conceivable to one of ordinary skill that the optimum amount of water to enable a fast reaction will be different for each system.

While it is useful to know the amount of porosity in the system, the amount of water required is also dependent on the sizes of the pores, shapes of the pores, the tortuosity of the pores and whether any of the pores happen to be closed pores. Closed pores will not provide reactive sites for the infiltrating solution unless it is transformed to an open pore by the ensuing reaction that dissolves significant portions of the porous matrix. In addition, the above discussion assumes the porous structure is uniform. However, if the pore structure is not uniform, then the optimum concentration of the water depends on the region of heterogeneous structure being saturated with water. That being said, considering a system that has poly disperse pores, it is conceivable that an infiltrating solution can completely fill the small pores while maintaining the larger pores as partially filled. Such a situation is acceptable, provided that the open pores are within reasonable proximity of the filled ones. The exact distance of proximity cannot be precisely defined because the distance depends on temperature, pressure and composition of the gas, infiltrating solution, and porous matrix.

The above discussion demonstrates that it is impossible to specify a precise amount of water (e.g., solvent) required for optimizing the speed of the reaction because of the infinite ways that porosity can be described. Thus optimum water concentrations could be 1 vol % (DPS=20%) when the packing density is 95 vol % but could be 24 vol % (DPS=63%) when the packing density is 62 vol %. It is conceivable that methods to predict the right porosity will be possible with detailed knowledge of the porosity, pore size distribution, pore shape, tortuosity, fraction of open to closed pores in the matrix and the uniformity of the various types or pores on all length scales for the object being reacted. Thus, an important aspect of this invention is the recognition that the optimum water concentration can in fact vary over a very wide range of water concentration whenever it is important for a gas to convect or diffuse into a pore structure, dissolve and react with the solvent and subsequently react with the porous matrix.

Another important point of this invention is to recognize that there are different ways to distribute water in the porous matrix, as mentioned in this specification. For instance, if a fully saturated porous compact is saturated with water, drying could be used to create open pores. However, the pores in this structure have different DPS values as you travel from the outer surface to the inner bulk of the porous matrix. In the outer surface, pores will contain no water but as you move inward into the structure, pores are partially filled and as you move further into the structure the pores are completely filled. This structure clearly has a large gradient in DPS value and thus, the rate of reaction in this structure will vary from the outside of the structure towards the inside of the structure, assuming the gradient DPS structure remains static. However, the drying step is immediately ceased and the relative humidity is adjusted to the equilibrium value such that water loss from the porous matrix ceases, capillarity will drive the filled pores to empty into the partially filled ones and the partially filled pores will partially fill the empty pores where the entire structure will have a much more uniform distribution of water. Such a situation is one where the non-uniform system will not react as fast as the uniform one because more reaction sites are available in the uniform one due to all the pores being accessible. Thus, this example shows how the distribution of water in the porous matrix is equally important. Thus, in addition to the method of addition of the infiltrate solution components, (solvent, reactive species) the optimum concentration of water also depends on whether the porous structure is maintained as homogeneous or inhomogeneous. Thus, in any situation where the optimum concentration of water must be specified, a description of the homogeneity is important towards developing an understanding of why a certain concentration of water yields the fastest reaction rate, as well as how to reproduce that very same set of conditions each time a densification reaction is performed. It is also important to point out that in situations where distribution of the solvent or in other words, water is not distributed uniformly, processes such as annealing can be performed to redistribute the water. For water, this is best to do in a controlled humidity environment so no water evaporates from the sample. Instead, the water simply flows into open pores to balance the capillary forces of fluid between the various pores in the matrix.

FIGS. 10-12 are three examples of how carbonation reactions involving CO₂ as a gas phase and liquid water in the pore structure exhibit an optimum DPS value to maximize the degree of carbonation of a given CaSiO₃ binder.

g-rHLPD utilizes partially infiltrated pore space so as to enable gaseous diffusion to rapidly infiltrate the porous preform and saturate thin liquid interfacial solvent films in the pores with dissolved CO₂. CO₂-based species have low solubility in pure water (1.5 g/L at 25° C., 1 atm). Thus, a substantial quantity of CO₂ must be continuously supplied to and distributed throughout the porous preform to enable significant carbonate conversion. Utilizing gas phase diffusion offers a 100-fold increase in diffusion length over that of diffusing soluble CO.sub.2 an equivalent time in a liquid phase. Wollastonite porous matrices with a bulk density of ~1.88 g/cc, was prepared by wet pressing. By partially infiltrating this matrix, the reaction can proceed to a high degree of carbonation in a fixed period of time. For example, in the partially infiltrated state, 47.5 ± 2.7 mol % conversion of CaSiO₃ into CaCO₃ and SiO₂ can be achieved in ~19 h at a temperature of 90° C. and a pressure of 2.36 atm. If all the same reaction conditions are maintained except that the pores are completely filled with water, a substantially lower carbonation conversion, 3.8 ± 0.5 mol %, results.

To demonstrate this and the concept of practicing the DPS concepts to find conditions of enhanced reactivity and reaction yield (high fraction reacted), samples were reacted in a container made from a micro-porous Gore-Tex^{™} layer. Gore-Tex^{™} only allows water vapor species to and from the sample in a water-saturated atmosphere where the CO₂ activity is fixed at a pressure of 2.36 atm and a temperature of 90° C. A pool of water added below the sample to saturate the atmosphere and co-exist with the water vapor in the reaction throughout the duration of the reaction. Thus, the chosen water content in the porous matrix is fixed by the equilibrating water vapor and no evaporation occurs in the porous matrix. Instead, the porous matrix redistributes the water in the matrix homogenously using capillary flow with no mass loss. A porous matrix was prepared having a bulk density of 1.83-1.86 g/cc using the wet pressing method. For 19 h reactions, [when the DPS is increased from 0 to 60 vol %.], the degree of carbonation varies from 31.3 mol % to a maximum level of 49.6 mol % beyond this value, the degree of carbonation drops to 35.6 mol % when the DPS is increased to 80% and to 3.8 mol % when the DPS is 100%. These data are plotted in FIG. 10. These data demonstrate that optimum amounts of liquid water solvent at a DPS of 60 vol % in the pores maximizes the reaction yield for a 19 h process.

FIG. 10 represents a first example of carbonation reactions involving CO₂ as a gas phase and liquid water in the pore structure.

FIG. 11 represents a second example of carbonation reactions involving CO₂ as a gas phase and liquid water in the pore structure: Carmel Quartz Composition, 8 × 8 × 1.5" (20.3 × 20.3 × 5.1 cm) Vibratory Cast reacted, 90 C, 20 PSIG (1.38 bars) reaction.

FIG. 12 represents a third example of carbonation reactions involving CO₂as a gas phase and liquid water in the pore structure: 1-2-3 Composition, 8 × 8 × 2" (20.3 × 20.3 × 2.5 cm) sample size reacted at 90 C 20 PSIG (1.38 bars), at -90% Relative humidity (-90% RH).

In each of these graphs, the systems differed from one another in that the sample size, shape, reactive wollastonite, reaction time, reaction temperature, relative humidity and reactor design all differed, yet each system was consistent within itself to show an optimum concentration where mass transport and reaction rate was optimized to maximize the amount of carbonate formed. The optimum DPS value varied from 20 to 60 vol %. In these cases, all the porous matrices have a relative density of about 60%. Thus, if a porous matrix was significantly more or less dense, this range of value can be even greater, assuming the pore size and tortuosity is the same. If pore size and tortuosity were different, the value may vary over an even wider range. Thus, a key step in optimizing the degree of carbonation and carbonation rate is to recognize that there is an optimum DPS value for any given method of water delivery. Knowing this value will enable the determination of the ideal conditions for minimizing the amount of reaction time as well as crystallize more binding phase by the hydrothermal liquid phase sintering reaction.

A further improvement of the invention can be made when gas species are mechanically convected by applying a pressure gradient across the porous matrix. If the gas is a reactive species, pores filled with solvent fluid can flow out of the pores leaving behind a film of solvent on the pores that can absorb the reactive species gas. Alternatively, partially filled pores will allow gas to flow through the pores as the solvent absorbs a portion of the gas flowing through.

The preferred approach should utilize low temperatures and low pressures to enable low cost processes to be developed. Thus, processes that retain a fraction of solvent in the pores to facilitate gaseous diffusion of reactive species are preferred over those that utilize quiescent fluids for reactions where a large fraction of product is desired. If gaseous precursors are not available, then methods that mechanically convect the infiltration fluid rapidly through the porous matrix are a viable alternative approach.

### NON-LIMITING WORKING EXAMPLES

### Example A

External, Transport by Means of Water Vapor
A1 Mixing
   Eleven kg and one hundred and seventeen grams NYAD 400, 20.39 kg of mason sand, 16.76 kg of 1/4" (6.4 mm) aggregate, and 16.76 kg of #67 aggregate were gathered in separate buckets. Then, batch water was prepared by premixing 4.9 kg deionized water, 55 ml Glenium, and 8 g welan gum. #67 and 1/4" aggregate were loaded into the Marshall tow concrete mixer and roughly 1/4 of the batch water solution was poured on the aggregate. The mixer was started and run at full speed for 1 minute. With mixer running the mason sand was poured in. After another 1 minute of mixing the NYAD400 was directly added into the mixer while it was running. The mixer was run for an additional 1 minute and then the remaining batch water was added directly into the mix while the mixer was running. Then the batch was mixed for 2 minutes and the mixer was stopped. The sides of the mixer were scraped with a putty knife to remove stuck material. The mixer was started again and run at full speed for an additional 3 minutes. The mixer was stopped and mix poured into 5 gallon (19 L) buckets.
A2 Casting
   One feet by 1' by 6" (30.5 × 30.5 × 15.2 cm) molds were lubricated by spraying WD-40 on a rag and wiping the inside surface of a clean mold down. Using the table scale, the weight of the mold was recorded. The lubricated mold was placed on the Vibco vibration table. The mix was removed from the bucket with a trowel, scoop, or by hand and the mold filled approximately 1/4 of the way. Then the mold was vibrated on 60% power for approximately 1 minute or until the mix had formed to the mold. The process was repeated until the mold was full to the brim. A final weight on the samples was recorded before storing in an area to air-dry over-night.
A3 Drying
   Air-dry samples overnight. After 24 hr of air-drying, samples placed in an oven at 90° C. After 24 hr at 90° C. samples removed and de-molded. Samples were put back in the oven for an additional 48 hr to fully dry before reaction.
A4 Reacting

The autoclave used for curing (reacting) the samples is a stainless steel, horizontal, indirect steam unit with a radius of 7 (2.1 m) and a length of 12 feet (3.7 m). Samples were loaded into the pre-heated autoclave at 90° C. After the autoclave door was closed, it was evacuated down to -14 psig in 15 minutes. The autoclave was back filled with heated CO₂ gas and steam at 147.5° C. to provide additional heat to the samples and to account for the heat loss occurred during sample loading and expansion of the gasses. Once the pressure in the autoclave reached 0 psig, the fan of the autoclave was started at 4900 RPM. The CO₂ was cut off when the total pressure reached 10 psig. The autoclave temperature was set to 90° C. and hot water at 95° C. was circulated at the bottom of the autoclave to keep the unit saturated with water vapor. The system was allowed to equilibrate for 45 min to 1 hr (total psi reaching approximately 16 psig), and then the autoclave pressure was increased to 20 psig by filling with heated CO₂ gas only. The samples were cured for 19 hours. (1 psig = 0.07 bars)

The reacted samples were dried in a dying oven at 90° C. until there was no further weight loss. The extent of the reaction was calculated based on the weight gain during the reaction. The average extent of reaction was 35%.

### Example B

### Internal, Partial Drying

### B1 Mixing

Eleven kg and one hundred and seventeen grams NYAD 400, 20.39 kg of mason sand, 16.76 kg of 1/4" (6.4 mm) aggregate, and 16.76 kg of #67 aggregate were gathered in separate buckets. Then batch water was prepared by premixing 4.9 kg deionized water, 55 ml Glenium, and 8 g welan gum #67 and 1/4" (6.4 mm) aggregate were loaded into the Marshalltow concrete mixer and roughly 1/4 of the batch water solution was poured on the aggregate. The mixer was started and run at full speed for 1 minute. With mixer running the mason sand was poured in. After another 1 minute of mixing the NYAD400 was directly added into the mixer while it was running. The mixer was run for an additional 1 minute and then the remaining batch water was added directly into the mix while the mixer was running. Then the batch was mixed for 2 minutes and the mixer was stopped. The sides of the mixer were scraped with a putty knife to remove stuck material. The mixer was started again and ran at full speed for an additional 3 minutes. The mixer was stopped and mix poured into 5 gallon (19 L) buckets.

### B2 Casting

One feet by 1' by 6" (30.5 × 30.5 × 15.2 cm) were lubricated by spraying WD-40 on a rag and wiping the inside surface of a clean mold down. Using the table scale, the weight of the mold was recorded. The lubricated mold was placed on the Vibco vibration table. The mix was removed from the bucket with a trowel, scoop, or by hand and the mold filled approximately 1/4 of the way. Then the mold was vibrated on 60% power for approximately 1 minute or until the mix had formed to the mold. The process was repeated until the mold was full to the brim. A final weight on the samples was recorded before storing in an area to air-dry over-night B3 Drying

Air-dry samples overnight. After 24 hr of air-drying, samples placed in an oven at 90° C. After 24 hr at 90° C. samples removed and de-molded. Samples put back in the oven until the samples were dried down to 2.2 wt % residual water.

### B4 Reacting

The autoclave used for curing the samples is a stainless steel, horizontal, indirect steam unit with a radius of 7 (2.1 m) and a length of 12 feet (3.7 m). Samples were loaded in to the pre-heated autoclave at 90° C. After the autoclave door was closed the autoclave was back filled with heated CO₂ gas and steam at 147.5° C. to provide additional heat to the samples and to account for the heat loss occurred during sample loading and expansion of the gasses. The fan of the autoclave was started at 4900 RPM. The CO₂ was cut off when the total pressure reached 10 psig. The autoclave temperature was set to 90° C. and hot water at 95° C. was circulated at the bottom of the autoclave to keep the unit saturated with water vapor. The system was allowed to equilibrate for 45 min to 1 hr (total psi reaching approximately 16 psig), and then the autoclave pressure was increased to 20 psig by filling with heated CO₂ gas only. The samples were cured for 19 hours. (1 psig = 0.07 bars)

The reacted samples were dried in a dying oven at 90° C. until there was no further weight loss. The extent of the reaction was calculated based on the weight gain during the reaction. The average extent of reaction was 53%.

In some embodiments, the mechanically convection comprises one of pressurized flow, capillary electro-osmotic flow, magneto-osmotic flow, and temperature- and chemical-gradient driven flow.

In some embodiments, the monolithic ceramic body has a degree of pore saturation value of from about 15% to about 70%.

### DEFINITIONS

Any reference in the claims to an electronic signal or an electromagnetic signal (or their equivalents) is to be understood that in a preferred embodiment the signal is a non-transitory electronic signal or a non-transitory electromagnetic signal. If the signal *per se* is not claimed, the reference may in some instances be to a description of a propagating or transitory electronic signal or electromagnetic signal.

### THEORETICAL DISCUSSION

Although the theoretical description given herein is thought to be correct, the operation of the devices described and claimed herein does not depend upon the accuracy or validity of the theoretical description. That is, later theoretical developments that may explain the observed results on a basis different from the theory presented herein will not detract from the inventions described herein.

While the present invention has been particularly shown and described with reference to the preferred mode as illustrated in the drawing, it will be understood by one skilled in the art that various changes in detail may be affected therein without departing from the scope of the invention as defined by the claims.

## Claims

1. An apparatus for curing materials that cure under reaction with CO₂, comprising:
a curing chamber configured to contain a material that consumes CO₂ as a reagent, said material does not cure in an absence of CO₂ during curing, said material does not cure in the presence of water alone, and said material does not consume water during curing, said curing chamber having at least one port configured to allow said material to be introduced into said curing chamber and to be removed from said curing chamber, and having at least one closure for said port, said closure configured to provide an atmospheric seal when closed so as to prevent contamination of a gas present in said curing chamber by gas outside said curing chamber;
a source of carbon dioxide or air configured to provide gaseous carbon dioxide or air to said curing chamber by way of a gas entry port in said curing chamber, said source of carbon dioxide or air having at least one flow regulation device configured to control a flow rate of said gaseous carbon dioxide or air into said curing chamber;
a gas flow subsystem configured to circulate said gaseous carbon dioxide or air through said curing chamber;
a temperature control subsystem configured to control a temperature of said gas within said chamber;
a humidity control subsystem configured to control a humidity in said gas within said chamber; and
at least one controller in communication with at least one of said source of carbon dioxide, said gas flow subsystem, said temperature control subsystem, and said humidity control subsystem,
said at least one controller configured to control independently at least a respective one of a flow rate of said gas inside the chamber, circulation of said gas through said curing chamber, said temperature of said gas, and said humidity in said gas,
said at least one controller configured to provide a time of residence in a first drying phase (Phase 1), wherein a residence time in said first drying phase is configured to be minimized, **characterized in that**
said at least one controller is configured to transition fromsaid first drying phase (Phase 1) to a second carbonation phase (Phase 2) at the end of said first drying phase (Phase 1);
wherein the apparatus is configured to detect a transition from the first drying phase (Phase 1) to the second carbonation phase (Phase 2) by detecting a change in one or more electrical properties of the material on the surface or in the bulk thereof.

2. The apparatus of claim 1, wherein the apparatus is configured to first expose the material to the first drying phase (Phase 1) in absence of deliberately added CO₂.

3. The apparatus of claim 1, wherein the apparatus is configured to first expose the material to the first drying phase (Phase 1) in presence of CO₂.

4. The apparatus of claim 1, wherein the one or multiple electrical properties of the material include at least one of a surface resistivity, a volume resistivity, a conductivity, an impedance, a capacitance, a dielectric constant, a dielectric strength, a permittivity, a piezoelectric constant, and a Seebeck coefficient.

5. The apparatus of claim 1, wherein the apparatus is configured to measure, track and control the pressure inside the chamber throughout the process in any of the first drying phase (Phase 1) and the second curing phase (Phase 2).

6. The apparatus of claim 1, wherein the temperature control subsystem further comprises at least one energy source configured to heat at least one of the gas and the material.

7. The apparatus of claim 6, wherein the energy source is configured to control the time of residence in at least one of the first drying phase (Phase 1) and the second carbonation phase (Phase 2).

8. The apparatus of claim 6, wherein said energy source is configured to employ fossil fuel combustion.

9. The apparatus of claim 6, wherein said energy source is configured to employ electrical resistance heating.

10. The apparatus of claim 6, wherein said energy source is configured to employ dielectric heating.

11. The apparatus of claim 6, wherein said energy source is configured to employ a radiation heat source.

12. The apparatus of claim 1, wherein the humidity control subsystem is configured to control water extraction from the material.

13. The apparatus of claim 12, wherein the humidity control subsystem is configured to control the water extraction using a desiccant.

14. The apparatus of claim 12, wherein the humidity control subsystem is configured to control the water extraction using one of a heat exchanger and a chiller.

15. The apparatus of claim 1, wherein the gas flow subsystem is configured to control the circulation of the gas in the chamber to control the water removal in the first drying phase (Phase 1) and to control a rate of reaction in the second carbonation phase.

16. The apparatus of claim 1, wherein the gas flow subsystem is configured to control a flow and a velocity of the gas adjacent to the material.

## Patentansprüche

1. Vorrichtung zum Härten von Materialien, die unter Reaktion mit CO₂ aushärten, umfassend:
eine Härtungskammer, die konfiguriert ist, um ein Material zu enthalten, das CO₂ als ein Reagenz verbraucht, wobei das Material während des Härtens nicht in Abwesenheit von CO₂ aushärtet, wobei das Material in Gegenwart von Wasser allein nicht aushärtet und das Material während des Härtens kein Wasser verbraucht, wobei die Härtungskammer mindestens einen Anschluss aufweist, der konfiguriert ist, um zu ermöglichen, dass das Material in die Härtungskammer eingeführt und aus der Härtungskammer entfernt wird, und mindestens einen Verschluss für den Anschluss aufweist, wobei der Verschluss konfiguriert ist, um eine atmosphärische Dichtung bereitzustellen, wenn er geschlossen ist, um eine Kontamination eines Gases, das in der Härtungskammer vorhanden ist, durch Gas au-ßerhalb der Härtungskammer zu verhindern;
eine Kohlendioxid- oder Luftquelle, die konfiguriert ist, um der Härtungskammer gasförmiges Kohlendioxid oder Luft durch einen Gaseintrittsanschluss in der Härtungskammer bereitzustellen, wobei die Kohlendioxid- oder Luftquelle mindestens eine Strömungsregelungsvorrichtung aufweist, die konfiguriert ist, um eine Strömungsrate des gasförmigen Kohlendioxids oder der Luft in die Härtungskammer zu steuern;
ein Gasströmungssubsystem, das konfiguriert ist, um das gasförmige Kohlendioxid oder die Luft durch die Härtungskammer zu zirkulieren;
ein Temperatursteuerungssubsystem, das konfiguriert ist, um eine Temperatur des Gases innerhalb der Kammer zu steuern;
ein Feuchtigkeitssteuerungssubsystem, das konfiguriert ist, um eine Feuchtigkeit in dem Gas innerhalb der Kammer zu steuern; und
mindestens eine Steuerung, die in Kommunikation mit mindestens einem von der Kohlendioxidquelle, dem Gasströmungssubsystem, dem Temperatursteuerungssubsystem und dem Feuchtigkeitssteuerungssubsystem ist,
wobei die mindestens eine Steuerung konfiguriert ist, um unabhängig mindestens ein jeweiliges von einer Strömungsrate des Gases innerhalb der Kammer, einer Zirkulation des Gases durch die Härtungskammer, der Temperatur des Gases und der Feuchtigkeit in dem Gas zu steuern,
wobei die mindestens eine Steuerung konfiguriert ist, um eine Verweilzeit in einer ersten Trocknungsphase (Phase 1) bereitzustellen, wobei eine Verweilzeit in der ersten Trocknungsphase konfiguriert ist, um minimiert zu werden, **dadurch gekennzeichnet, dass**
die mindestens eine Steuerung konfiguriert ist, um am Ende der ersten Trocknungsphase (Phase 1) von der ersten Trocknungsphase (Phase 1) in eine zweite Carbonisierungsphase (Phase 2) überzugehen;
wobei die Vorrichtung konfiguriert ist, um einen Übergang von der ersten Trocknungsphase (Phase 1) in die zweite Carbonisierungsphase (Phase 2) durch Erfassen einer Änderung einer oder mehrerer elektrischer Eigenschaften des Materials auf der Oberfläche oder in der Masse davon zu erkennen.

2. Vorrichtung nach Anspruch 1, wobei die Vorrichtung konfiguriert ist, um zuerst der ersten Trocknungsphase (Phase 1) das Material in Abwesenheit von bewusst zugesetztem CO₂ auszusetzen.

3. Vorrichtung nach Anspruch 1, wobei die Vorrichtung konfiguriert ist, um zuerst der ersten Trocknungsphase (Phase 1) das Material in Gegenwart von CO₂ auszusetzen.

4. Vorrichtung nach Anspruch 1, wobei die eine oder die mehreren elektrischen Eigenschaften des Materials mindestens eines von einem Oberflächenwiderstand, einem Volumenwiderstand, einer Leitfähigkeit, einer Impedanz, einer Kapazitanz, einer Dielektrizitätskonstanten, einer Durchschlagfestigkeit, einer Permittivität, einer piezoelektrischen Konstanten und eines Seebeck-Koeffizienten einschließen.

5. Vorrichtung nach Anspruch 1, wobei die Vorrichtung konfiguriert ist, um den Druck innerhalb der Kammer während des gesamten Prozesses in einer der ersten Trocknungsphase (Phase 1) und der zweiten Härtungsphase (Phase 2) zu messen, zu verfolgen und zu steuern.

6. Vorrichtung nach Anspruch 1, wobei das Temperatursteuerungssubsystem ferner mindestens eine Energiequelle umfasst, die konfiguriert ist, um mindestens eines von dem Gas und dem Material zu erwärmen.

7. Vorrichtung nach Anspruch 6, wobei die Energiequelle konfiguriert ist, um die Verweilzeit in mindestens einer der ersten Trocknungsphase (Phase 1) und der zweiten Carbonisierungsphase (Phase 2) zu steuern.

8. Vorrichtung nach Anspruch 6, wobei die Energiequelle konfiguriert ist, um eine Verbrennung von fossilem Kraftstoff zu verwenden.

9. Vorrichtung nach Anspruch 6, wobei die Energiequelle konfiguriert ist, um eine elektrische Widerstandsheizung zu verwenden.

10. Vorrichtung nach Anspruch 6, wobei die Energiequelle konfiguriert ist, um eine dielektrische Heizung zu verwenden.

11. Vorrichtung nach Anspruch 6, wobei die Energiequelle konfiguriert ist, um eine Strahlungswärmequelle zu verwenden.

12. Vorrichtung nach Anspruch 1, wobei das Feuchtigkeitssteuerungssubsystem konfiguriert ist, um Wasserextraktion aus dem Material zu steuern.

13. Vorrichtung nach Anspruch 12, wobei das Feuchtigkeitssteuerungssubsystem konfiguriert ist, um die Wasserextraktion unter Verwendung eines Trockenmittels zu steuern.

14. Vorrichtung nach Anspruch 12, wobei das Feuchtigkeitssteuerungssubsystem konfiguriert ist, um die Wasserextraktion unter Verwendung eines von einem Wärmetauscher und einem Kühler zu steuern.

15. Vorrichtung nach Anspruch 1, wobei das Gasströmungssubsystem konfiguriert ist, um die Zirkulation des Gases in der Kammer zu steuern, um die Wasserentfernung in der ersten Trocknungsphase (Phase 1) zu steuern und eine Reaktionsrate in der zweiten Carbonisierungsphase zu steuern.

16. Vorrichtung nach Anspruch 1, wobei das Gasströmungssubsystem konfiguriert ist, um einen Durchfluss und eine Geschwindigkeit des Gases angrenzend an das Material zu steuern.

## Revendications

1. Appareil pour le durcissement de matériaux qui durcissent en réaction avec du CO₂, comprenant :
une chambre de durcissement configurée pour contenir un matériau qui consomme du CO₂ en tant que réactif, ledit matériau ne durcit pas en l'absence de CO₂ pendant le durcissement, ledit matériau ne durcit pas en présence d'eau seule, et ledit matériau ne consomme pas d'eau pendant le durcissement, ladite chambre de durcissement ayant au moins un orifice configuré pour permettre audit matériau d'être introduit dans ladite chambre de durcissement et d'être retiré de ladite chambre de durcissement, et ayant au moins une fermeture pour ledit orifice, ladite fermeture configurée pour fournir un joint d'étanchéité atmosphérique lorsqu'elle est fermée de façon à empêcher une contamination d'un gaz présent dans ladite chambre de durcissement par un gaz à l'extérieur de ladite chambre de durcissement ;
une source de dioxyde de carbone ou d'air configurée pour fournir du dioxyde de carbone gazeux ou de l'air à ladite chambre de durcissement au moyen d'un orifice d'entrée de gaz dans ladite chambre de durcissement, ladite source de dioxyde de carbone ou d'air ayant au moins un dispositif de commande d'écoulement configuré pour commander un débit d'écoulement dudit dioxyde de carbone gazeux ou de l'air dans ladite chambre de durcissement ;
un sous-système d'écoulement de gaz configuré pour faire circuler ledit dioxyde de carbone gazeux ou air à travers ladite chambre de durcissement ;
un sous-système de commande de température configuré pour commander une température dudit gaz au sein de ladite chambre ;
un sous-système de commande d'humidité configuré pour commander une humidité dans ledit gaz au sein de ladite chambre ; et
au moins un dispositif de commande en communication avec au moins un de ladite source de dioxyde de carbone, dudit sous-système d'écoulement de gaz, dudit sous-système de commande de température et dudit sous-système de commande d'humidité,
ledit au moins un dispositif de commande configuré pour commander indépendamment au moins un respectif parmi un débit d'écoulement dudit gaz à l'intérieur de la chambre, une circulation dudit gaz à travers ladite chambre de durcissement, ladite température dudit gaz et ladite humidité dans ledit gaz,
ledit au moins un dispositif de commande configuré pour fournir un temps de séjour dans une première phase de séchage (Phase 1), dans lequel un temps de séjour dans ladite première phase de séchage est configuré pour être minimisé, **caractérisé en ce que**
ledit au moins un dispositif de commande est configuré pour effectuer une transition depuis ladite première phase de séchage (Phase 1) vers une seconde phase de carbonatation (Phase 2) à la fin de ladite première phase de séchage (Phase 1) ;
dans lequel l'appareil est configuré pour détecter une transition depuis la première phase de séchage (Phase 1) vers la seconde phase de carbonatation (Phase 2) en détectant un changement dans une ou plusieurs propriétés électriques du matériau sur la surface ou dans la masse de celui-ci.

2. Appareil selon la revendication 1, dans lequel l'appareil est configuré pour exposer d'abord le matériau à la première phase de séchage (Phase 1) en l'absence de CO₂ volontairement ajouté.

3. Appareil selon la revendication 1, dans lequel l'appareil est configuré pour exposer d'abord le matériau à la première phase de séchage (Phase 1) en présence de CO₂.

4. Appareil selon la revendication 1, dans lequel la ou les multiples propriétés électriques du matériau comportent au moins un parmi une résistivité superficielle, une résistivité volumique, une conductivité, une impédance, une capacité, une constante diélectrique, une rigidité diélectrique, une permittivité, une constante piézoélectrique et un coefficient Seebeck.

5. Appareil selon la revendication 1, dans lequel l'appareil est configuré pour mesurer, suivre et commander la pression à l'intérieur de la chambre sur l'ensemble du processus dans l'une quelconque de la première phase de séchage (Phase 1) et de la seconde phase de durcissement (Phase 2).

6. Appareil selon la revendication 1, dans lequel le sous-système de commande de température comprend en outre au moins une source d'énergie configurée pour chauffer au moins un du gaz et du matériau.

7. Appareil selon la revendication 6, dans lequel la source d'énergie est configurée pour commander le temps de séjour dans au moins une de la première phase de séchage (Phase 1) et de la seconde phase de carbonatation (Phase 2).

8. Appareil selon la revendication 6, dans lequel ladite source d'énergie est configurée pour employer une combustion de combustibles fossiles.

9. Appareil selon la revendication 6, dans lequel ladite source d'énergie est configurée pour employer un chauffage par résistance électrique.

10. Appareil selon la revendication 6, dans lequel ladite source d'énergie est configurée pour employer un chauffage diélectrique.

11. Appareil selon la revendication 6, dans lequel ladite source d'énergie est configurée pour employer une source de chaleur par rayonnement.

12. Appareil selon la revendication 1, dans lequel le sous-système de commande d'humidité est configuré pour commander une extraction d'eau hors du matériau.

13. Appareil selon la revendication 12, dans lequel le sous-système de commande d'humidité est configuré pour commander l'extraction d'eau en utilisant un dessiccant.

14. Appareil selon la revendication 12, dans lequel le sous-système de commande d'humidité est configuré pour commander l'extraction d'eau en utilisant un parmi un échangeur thermique et un refroidisseur.

15. Appareil selon la revendication 1, dans lequel le sous-système d'écoulement de gaz est configuré pour commander la circulation du gaz dans la chambre pour commander l'élimination d'eau dans la première phase de séchage (Phase 1) et pour commander une vitesse de réaction dans la seconde phase de carbonatation.

16. Appareil selon la revendication 1, dans lequel le sous-système d'écoulement de gaz est configuré pour commander un écoulement et une vitesse du gaz adjacent au matériau.
